# EUROPEAN PATENT APPLICATION

(11) **EP 4 495 862 A1**
(43) Date of publication of application: **22.01.2025**
(21) Application number: 23870243.5
(22) Date of filing: 07.09.2023
(51) Int. Cl.: G06Q 30/02

(54) **PROMOTION METHOD, ELECTRONIC DEVICE, AND SYSTEM**

(30) Priority: 28.09.2022 CN 202211194297
(71) Applicant: Huawei Technologies Co., Ltd., Shenzhen, Guangdong 518129 (CN)
(72) Inventor: ZHANG, Tengxiang, Shenzhen, Guangdong 518129 (CN); HU, Meng, Shenzhen, Guangdong 518129 (CN); TIAN, Yaohua, Shenzhen, Guangdong 518129 (CN)
(74) Representative: Pfenning, Meinig & Partner mbB
(86) International application number: PCT/CN2023/117470
(87) International publication number: WO 2024/067004

(57) **Abstract**

This application provides a promotion method, an electronic device, and a system, and relates to the field of terminal technologies. In this application, a first electronic device sends, to a server, information of the first electronic device and/or information of a second electronic device connected to the first electronic device, to obtain recommended content. In this way, the recommended content obtained by the first electronic device can better meet a user requirement. The method includes: The first electronic device sends an advertisement request to a first server. The advertisement request carries information of at least one electronic device. The information of the at least one electronic device includes first information of the first electronic device and/or second information of the second electronic device, and a communication connection is established between the first electronic device and the second electronic device. Then, in response to a received advertisement response sent by the first server, the first electronic device displays recommended content. The advertisement response is determined by the first server based on the first information and/or the second information.

## Description

This application claims priority to Chinese Patent Application No. 202211194297.0, filed with the China National Intellectual Property Administration on September 28, 2022 and entitled "PROMOTION METHOD, ELECTRONIC DEVICE, AND SYSTEM", which is incorporated herein by reference in its entirety.

### TECHNICAL FIELD

Embodiments of this application relate to the field of terminal technologies, and in particular, to a promotion method, an electronic device, and a system.

### BACKGROUND

With development of terminal technologies, different applications may be installed in an electronic device to implement various functions of the electronic device. Usually, the electronic device may display a promotion application in an application market. Then, in response to a download operation indicated by a user, the electronic device may download the promotion application, thereby implementing application promotion.

However, in the foregoing application promotion manner, a conversion rate of the promotion application is low.

### SUMMARY

To resolve the foregoing technical problem, embodiments of this application provide a promotion method, an electronic device, and a system. According to the technical solutions provided in embodiments of this application, a first electronic device sends, to a first server, information of the first electronic device and/or information of a second electronic device connected to the first electronic device, and the first server may send recommended content to the first electronic device based on the obtained information. In this way, in a multi-terminal interaction scenario, the first electronic device can obtain the recommended content that better meets a user requirement.

To achieve the foregoing technical objective, embodiments of this application provide the following technical solutions.

According to a first aspect, an embodiment of this application provides a promotion method, applied to a first electronic device. The method includes: sending an advertisement request to a first server, where the advertisement request carries information of at least one electronic device, the information of the at least one electronic device includes first information of the first electronic device and/or second information of a second electronic device, and a communication connection is established between the first electronic device and the second electronic device; receiving an advertisement response sent by the first server, where the advertisement response is determined by the first server based on the first information and/or the second information; and displaying recommended content based on the advertisement response.

Optionally, the first server is a server on an advertisement platform side.

In this way, the recommended content is promoted with reference to the information of the at least one electronic device, so that the recommended content better meets a usage requirement of a user, and a conversion rate of the recommended content may be increased.

According to the first aspect, before the sending an advertisement request to a first server, the method further includes: determining that a preset condition is met, where the preset condition includes establishing a communication connection with the second electronic device, or detecting a first operation performed by the user on the first electronic device.

According to any one of the first aspect or the foregoing implementations of the first aspect, the first information includes one or more of a device type, usage scenario information, a device identifier, an application installation situation, application usage information, and user preference information of the first electronic device; and the second information includes one or more of a device type, usage scenario information, a device identifier, an application installation situation, application usage information, and user preference information of the second electronic device.

Optionally, an application corresponding to the recommended content is applicable to a usage scenario of the first electronic device, and is an application installed in the second electronic device.

For example, the information of the at least one electronic device includes the first information and the second information, the first information includes the usage scenario information of the first electronic device, and the second information includes the application installation situation or the application usage information of the second electronic device. In this case, after the first server obtains the first information and the second information, the determined application corresponding to the recommended content is applicable to the usage scenario of the first electronic device, and is the application installed in the second electronic device.

In this way, the recommended content can better conform to a current usage scenario and satisfy a usage habit of the user. Further, a conversion rate of the application corresponding to the recommended content may be increased.

According to any one of the first aspect or the foregoing implementations of the first aspect, before the sending an advertisement request to a first server, the method further includes: obtaining the second information of the second electronic device.

According to any one of the first aspect or the foregoing implementations of the first aspect, the first operation is an operation of starting a target application, and the target application includes an application market, a leftmost screen, or a cloud folder.

For example, after establishing the communication connection with the second electronic device in response to an operation that the user indicates to establish the connection with the second electronic device, the first electronic device determines that the first electronic device meets the preset condition.

For another example, the first electronic device detects an operation of tapping an application market icon by the user, and determines that the user indicates to start the application market, to determine that the first electronic device meets the preset condition.

In some embodiments, after determining that the preset condition is met, the first electronic device sends the advertisement request to the first server, to request to obtain the recommended content.

According to any one of the first aspect or the foregoing implementations of the first aspect, the method further includes: detecting a second operation on the recommended content; when a first application corresponding to the recommended content is installed in the first electronic device, sending a page display request to a second server; and in response to a received page display response sent by the second server, displaying a landing page corresponding to the first application.

For example, the first electronic device displays a card, and the recommended content is displayed on the card. The first electronic device detects an operation performed by the user on the recommended content displayed on the card, determines that a promotion application corresponding to the recommended content is installed in the first electronic device, and may directly display a landing page of the promotion application on the card.

According to any one of the first aspect or the foregoing implementations of the first aspect, the method further includes: detecting a second operation on the recommended content; and when a first application corresponding to the recommended content is not installed in the first electronic device, sending an application download request to a third server, where the application download request is used to request to download the first application, and the third server is the same as or different from the first server.

For example, in a promotion task creation process, an advertiser enters an application download address. Subsequently, in an application promotion process, the advertisement response obtained by the first electronic device may carry the application download address. In this way, when determining that the application corresponding to the recommended content needs to be downloaded, the first electronic device may request to download the application based on the application download address.

According to any one of the first aspect or the foregoing implementations of the first aspect, the information of the at least one electronic device includes information of a plurality of electronic devices that establish communication connections with the first electronic device.

In this way, the first electronic device obtains the information of the plurality of electronic devices that establish communication connections with the first electronic device. Therefore, when promotion is required subsequently, recommended content determined based on the information of the plurality of electronic devices can be obtained, so that the recommended content better meets a requirement.

According to any one of the first aspect or the foregoing implementations of the first aspect, an advertisement type corresponding to the recommended content is a type of advertisement delivery performed on the first electronic device and the second electronic device.

For example, in a promotion task creation process, a task type included in promotion task information received by the first server is multi-terminal interactive promotion. That is, an advertisement type corresponding to the promotion task is allowing delivery to the plurality of electronic devices that establish communication connections.

According to any one of the first aspect or the foregoing implementations of the first aspect, the advertisement request is used to request to obtain a recommended application, or the advertisement request is used to request to obtain a recommended commodity.

For example, a promotion task created by an advertiser is used to promote an application, for example, an AA application. For another example, a promotion task created by an advertiser is used to promote a commodity, for example, a BB commodity.

In this way, the current promotion method may be applied to a plurality of promotion scenarios, to meet a plurality of requirements of the user.

According to a second aspect, an embodiment of this application provides a promotion method, applied to a first server. The method includes: receiving an advertisement request sent by a first electronic device, where the advertisement request carries information of at least one electronic device, the information of the at least one electronic device includes first information of the first electronic device and/or second information of a second electronic device, and a communication connection is established between the first electronic device and the second electronic device; generating an advertisement response based on the first information and/or the second information; and sending the advertisement response to the first electronic device, where the advertisement response indicates the first electronic device to display recommended content.

According to the second aspect, the first information includes one or more of a device type, usage scenario information, a device identifier, an application installation situation, application usage information, and user preference information of the first electronic device; and the second information includes one or more of a device type, usage scenario information, a device identifier, an application installation situation, application usage information, and user preference information of the second electronic device.

According to any one of the second aspect or the foregoing implementations of the second aspect, an application corresponding to the recommended content is applicable to a usage scenario of the first electronic device, and is an application installed in the second electronic device.

According to any one of the second aspect or the foregoing implementations of the second aspect, before the receiving an advertisement request sent by a first electronic device, the method further includes: receiving a delivery request that is of a first advertisement and that is sent by a third electronic device, where the delivery request of the first advertisement includes the recommended content and an advertisement type of the first advertisement, and the advertisement type of the first advertisement is a type of advertisement delivery performed on the first electronic device and the second electronic device.

According to any one of the second aspect or the foregoing implementations of the second aspect, the advertisement request is used to request to obtain a recommended application, or the advertisement request is used to request to obtain a recommended commodity.

For technical effects corresponding to any one of the second aspect and the implementations of the second aspect, refer to technical effects corresponding to any one of the first aspect and the implementations of the first aspect. Details are not described herein again.

According to a third aspect, an electronic device is provided. The electronic device includes a processor, a memory, and a display. The memory and the display are coupled to the processor. The memory is configured to store computer program code. The computer program code includes computer instructions. When the processor reads the computer instructions from the memory, the electronic device is enabled to perform the following operations: sending an advertisement request to a first server, where the advertisement request carries information of at least one electronic device, the information of the at least one electronic device includes first information of a first electronic device and/or second information of a second electronic device, and a communication connection is established between the first electronic device and the second electronic device; receiving an advertisement response sent by the first server, where the advertisement response is determined by the first server based on the first information and/or the second information; and displaying recommended content based on the advertisement response.

According to the third aspect, before the advertisement request is sent to the first server, when the processor reads the computer-readable instructions from the memory, the electronic device is further enabled to perform the following operation: determining that a preset condition is met, where the preset condition includes establishing a communication connection with the second electronic device, or detecting a first operation performed by a user on the first electronic device.

According to any one of the third aspect or the foregoing implementations of the third aspect, the first information includes one or more of a device type, usage scenario information, a device identifier, an application installation situation, application usage information, and user preference information of the first electronic device; and the second information includes one or more of a device type, usage scenario information, a device identifier, an application installation situation, application usage information, and user preference information of the second electronic device.

According to any one of the third aspect or the foregoing implementations of the third aspect, when the processor reads the computer-readable instructions from the memory, the electronic device is further enabled to perform the following operation: obtaining the second information of the second electronic device.

According to any one of the third aspect or the foregoing implementations of the third aspect, the first operation is an operation of starting a target application, and the target application includes an application market, a leftmost screen, or a cloud folder.

According to any one of the third aspect or the foregoing implementations of the third aspect, when the processor reads the computer-readable instructions from the memory, the electronic device is further enabled to perform the following operations: detecting a second operation on the recommended content; when a first application corresponding to the recommended content is installed in the first electronic device, sending a page display request to a second server; and in response to a received page display response sent by the second server, displaying a landing page corresponding to the first application.

According to any one of the third aspect or the foregoing implementations of the third aspect, when the processor reads the computer-readable instructions from the memory, the electronic device is further enabled to perform the following operations: detecting a second operation on the recommended content; and when a first application corresponding to the recommended content is not installed in the first electronic device, sending an application download request to a third server, where the application download request is used to request to download the first application, and the third server is the same as or different from the first server.

According to any one of the third aspect or the foregoing implementations of the third aspect, the information of the at least one electronic device includes information of a plurality of electronic devices that establish communication connections with the first electronic device.

According to any one of the third aspect or the foregoing implementations of the third aspect, an advertisement type corresponding to the recommended content is a type of advertisement delivery performed on the first electronic device and the second electronic device.

According to any one of the third aspect or the foregoing implementations of the third aspect, the advertisement request is used to request to obtain a recommended application, or the advertisement request is used to request to obtain a recommended commodity.

For technical effects corresponding to any one of the third aspect and the implementations of the third aspect, refer to technical effects corresponding to any one of the first aspect and the implementations of the first aspect. Details are not described herein again.

According to a fourth aspect, a server is provided. The server includes a processor and a memory. The memory is coupled to the processor. The memory is configured to store computer program code. The computer program code includes computer instructions. When the processor reads the computer instructions from the memory, the server is enabled to perform the following operations: receiving an advertisement request sent by a first electronic device, where the advertisement request carries information of at least one electronic device, the information of the at least one electronic device includes first information of the first electronic device and/or second information of a second electronic device, and a communication connection is established between the first electronic device and the second electronic device; generating an advertisement response based on the first information and/or the second information; and sending the advertisement response to the first electronic device, where the advertisement response indicates the first electronic device to display recommended content.

According to the fourth aspect, the first information includes one or more of a device type, usage scenario information, a device identifier, an application installation situation, application usage information, and user preference information of the first electronic device; and the second information includes one or more of a device type, usage scenario information, a device identifier, an application installation situation, application usage information, and user preference information of the second electronic device.

According to any one of the fourth aspect or the foregoing implementations of the fourth aspect, an application corresponding to the recommended content is applicable to a usage scenario of the first electronic device, and is an application installed in the second electronic device.

According to any one of the fourth aspect or the foregoing implementations of the fourth aspect, when the processor reads the computer-readable instructions from the memory, the server is further enabled to perform the following operation: receiving a delivery request that is of a first advertisement and that is sent by a third electronic device, where the delivery request of the first advertisement includes the recommended content and an advertisement type of the first advertisement, and the advertisement type of the first advertisement is a type of advertisement delivery performed on the first electronic device and the second electronic device.

According to any one of the fourth aspect or the foregoing implementations of the fourth aspect, the advertisement request is used to request to obtain a recommended application, or the advertisement request is used to request to obtain a recommended commodity.

For technical effects corresponding to any one of the fourth aspect and the implementations of the fourth aspect, refer to technical effects corresponding to any one of the first aspect and the implementations of the first aspect. Details are not described herein again.

According to a fifth aspect, an embodiment of this application provides a promotion system. The promotion system includes a first electronic device, a second electronic device, and a first server. A communication connection is established between the first electronic device and the second electronic device. The first electronic device is configured to send an advertisement request to the first server. The advertisement request carries information of at least one electronic device, and the information of the at least one electronic device includes first information of the first electronic device and/or second information of the second electronic device. The first server is configured to receive the advertisement request. The first server is further configured to generate an advertisement response based on the first information and/or the second information. The first server is further configured to send the advertisement response to the first electronic device. In response to the received advertisement response, the first electronic device is further configured to display recommended content.

According to the fifth aspect, the second electronic device is configured to send the second information to the first electronic device. The first electronic device is further configured to receive the second information.

According to any one of the fifth aspect or the foregoing implementations of the fifth aspect, the first electronic device is further configured to determine that a preset condition is met. The preset condition includes establishing a communication connection with the second electronic device, or detecting a first operation performed by a user on the first electronic device.

According to any one of the fifth aspect or the foregoing implementations of the fifth aspect, the first information includes one or more of a device type, usage scenario information, a device identifier, an application installation situation, application usage information, and user preference information of the first electronic device; and the second information includes one or more of a device type, usage scenario information, a device identifier, an application installation situation, application usage information, and user preference information of the second electronic device.

According to any one of the fifth aspect or the foregoing implementations of the fifth aspect, an advertisement type corresponding to the recommended content is a type of advertisement delivery performed on the first electronic device and the second electronic device.

For technical effects corresponding to any one of the fifth aspect and the implementations of the fifth aspect, refer to technical effects corresponding to any one of the first aspect and the implementations of the first aspect. Details are not described herein again.

According to a sixth aspect, an embodiment of this application provides an electronic device. The electronic device has a function of implementing the promotion method according to any one of the first aspect and the possible implementations of the first aspect. The function may be implemented by hardware, or may be implemented by hardware executing corresponding software. The hardware or the software includes one or more modules corresponding to the function.

For technical effects corresponding to any one of the sixth aspect and the implementations of the sixth aspect, refer to technical effects corresponding to any one of the first aspect and the implementations of the first aspect. Details are not described herein again.

According to a seventh aspect, an embodiment of this application provides a server. The server has a function of implementing the promotion method according to any one of the second aspect and the possible implementations of the second aspect. The function may be implemented by hardware, or may be implemented by hardware executing corresponding software. The hardware or the software includes one or more modules corresponding to the function.

For technical effects corresponding to any one of the seventh aspect and the implementations of the seventh aspect, refer to technical effects corresponding to any one of the second aspect and the implementations of the second aspect. Details are not described herein again.

According to an eighth aspect, an embodiment of this application provides a computer-readable storage medium. The computer-readable storage medium stores a computer program (which may also be referred to as instructions or code). When the computer program is executed by an electronic device, the electronic device is enabled to perform the method according to any one of the first aspect or the implementations of the first aspect.

For technical effects corresponding to any one of the eighth aspect and the implementations of the eighth aspect, refer to technical effects corresponding to any one of the first aspect and the implementations of the first aspect. Details are not described herein again.

According to a ninth aspect, an embodiment of this application provides a computer-readable storage medium. The computer-readable storage medium stores a computer program (which may also be referred to as instructions or code). When the computer program is executed by a server, the server is enabled to perform the method according to any one of the second aspect or the implementations of the second aspect.

For technical effects corresponding to any one of the ninth aspect and the implementations of the ninth aspect, refer to technical effects corresponding to any one of the second aspect and the implementations of the second aspect. Details are not described herein again.

According to a tenth aspect, an embodiment of this application provides a computer program product. When the computer program product is run on an electronic device, the electronic device is enabled to perform the method according to any one of the first aspect or the implementations of the first aspect.

For technical effects corresponding to any one of the tenth aspect and the implementations of the tenth aspect, refer to technical effects corresponding to any one of the first aspect and the implementations of the first aspect. Details are not described herein again.

According to an eleventh aspect, an embodiment of this application provides a computer program product. When the computer program product is run on a server, the server is enabled to perform the method according to any one of the first aspect or the implementations of the first aspect.

For technical effects corresponding to any one of the eleventh aspect and the implementations of the eleventh aspect, refer to technical effects corresponding to any one of the first aspect and the implementations of the first aspect. Details are not described herein again.

According to a twelfth aspect, an embodiment of this application provides a circuit system. The circuit system includes a processing circuit. The processing circuit is configured to perform the method according to any one of the first aspect or the implementations of the first aspect; or the processing circuit is configured to perform the method according to any one of the second aspect or the implementations of the second aspect.

For technical effects corresponding to any one of the twelfth aspect and the implementations of the twelfth aspect, refer to technical effects corresponding to any one of the first aspect and the implementations of the first aspect. Details are not described herein again.

According to a thirteenth aspect, an embodiment of this application provides a chip system, including at least one processor and at least one interface circuit. The at least one interface circuit is configured to perform receiving and sending functions, and send instructions to the at least one processor. When the at least one processor executes the instruction, the at least one processor performs the method according to any one of the first aspect or the implementations of the first aspect; or the at least one processor performs the method according to any one of the second aspect or the implementations of the second aspect.

For technical effects corresponding to any one of the thirteenth aspect and the implementations of the thirteenth aspect, refer to technical effects corresponding to any one of the first aspect and the implementations of the first aspect. Details are not described herein again.

### BRIEF DESCRIPTION OF DRAWINGS

FIG. 1 is a schematic flowchart 1 of a promotion method according to an embodiment of this application;
FIG. 2 is a schematic flowchart 2 of a promotion method according to an embodiment of this application;
FIG. 3A is a schematic diagram 1 of a communication system to which a promotion method is applied according to an embodiment of this application;
FIG. 3B is a schematic diagram 2 of a communication system to which a promotion method is applied according to an embodiment of this application;
FIG. 4A is a schematic diagram of a hardware structure of an electronic device according to an embodiment of this application;
FIG. 4B is a schematic block diagram of a software structure of an electronic device according to an embodiment of this application;
FIG. 5A is a schematic diagram of a hardware structure of a server according to an embodiment of this application;
FIG. 5B is a schematic block diagram of a software structure of a server according to an embodiment of this application;
FIG. 6 is a schematic flowchart 3 of a promotion method according to an embodiment of this application;
FIG. 7 is a schematic diagram 1 of an interface according to an embodiment of this application;
FIG. 8 is a schematic diagram 2 of an interface according to an embodiment of this application;
FIG. 9 is a schematic diagram 3 of an interface according to an embodiment of this application;
FIG. 10 is a schematic flowchart 4 of a promotion method according to an embodiment of this application;
FIG. 11 is a schematic diagram 4 of an interface according to an embodiment of this application;
FIG. 12A is a schematic diagram 5 of an interface according to an embodiment of this application;
FIG. 12B is a schematic diagram 6 of an interface according to an embodiment of this application;
FIG. 13 is a schematic flowchart 5 of a promotion method according to an embodiment of this application;
FIG. 14 is a schematic diagram 7 of an interface according to an embodiment of this application;
FIG. 15 is a schematic diagram 8 of an interface according to an embodiment of this application;
FIG. 16 is a schematic diagram 9 of an interface according to an embodiment of this application;
FIG. 17 is a schematic diagram 10 of an interface according to an embodiment of this application;
FIG. 18A and FIG. 18B are a schematic diagram 11 of an interface according to an embodiment of this application;
FIG. 19A and FIG. 19B are a schematic diagram 12 of an interface according to an embodiment of this application;
FIG. 20A and FIG. 20B are a schematic diagram 13 of an interface according to an embodiment of this application;
FIG. 21 is a schematic flowchart 6 of a promotion method according to an embodiment of this application;
FIG. 22 is a schematic diagram of a structure of a first electronic device according to an embodiment of this application; and
FIG. 23 is a schematic diagram of a structure of a first server according to an embodiment of this application.

### DESCRIPTION OF EMBODIMENTS

The following describes technical solutions in embodiments of this application with reference to the accompanying drawings in embodiments of this application. In the descriptions of embodiments of this application, terms used in the following embodiments are merely intended to describe purposes of specific embodiments, but are not intended to limit this application. The terms "one", "a", "the", "the foregoing", "this", and "the one" of singular forms used in this specification and the appended claims of this application are intended to include forms such as "one or more", unless otherwise specified in the context clearly. It should be further understood that, in the following embodiments of this application, "at least one" and "one or more" mean one or more (including two).

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner. The term "connection" includes a direct connection and an indirect connection, unless otherwise specified. "First" and "second" are merely intended for a purpose of description, and shall not be understood as an indication or implication of relative importance or implicit indication of a quantity of indicated technical features.

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. To be specific, use of the word "example", "for example", or the like is intended to present a related concept in a specific manner.

Usually, an application such as an application market that is used to install applications is installed in an electronic device. When a user needs to download an application, the user may search for the required application in the application market, and download the application. However, in an application search process, the user may need to perform a plurality of operations to search for a plurality of application categories to find the required application. The process is complex.

Therefore, a mode of recommending an application to a user in a preset manner is widely applied to an electronic device, to reduce difficulty of searching for an application by the user, and improve an application download rate.

For example, an application recommendation function is configured in the application market. A home page of the application market displays a promotion application delivered by an advertiser. The user may directly select and download an application in the application market based on a requirement.

For another example, after starting the application in response to a user operation, the electronic device may also display, on a launch screen of the application, a promotion application delivered by an advertiser. The user may select and download the promotion application based on a requirement.

However, in the foregoing application recommendation scenario, only interaction between a single electronic device and a server is performed. As a result, the application recommended by the electronic device may not meet a requirement of the user who uses the electronic device. In this case, the user further needs to search for a required application in the application market.

In some embodiments, some methods for implementing an application promotion objective through interaction between terminals are provided.

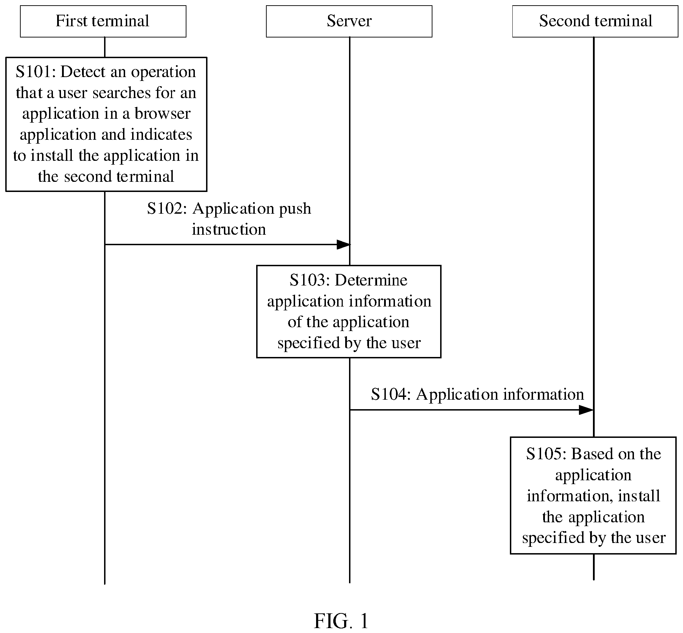

For example, as shown in FIG. 1, when detecting an operation that a user searches for an application in a browser application and indicates to install the application in a second terminal, a first terminal may send an application push instruction to a server (that is, steps S101 and S102). In response to the application push instruction, the server may determine application information of the application specified by the user, and send the application information to the second terminal (that is, steps S103 and S104). Then, in response to the user operation, the second terminal may install, based on the obtained application information, the application specified by the user (that is, step S105).

In this way, application promotion between the two terminals is implemented, and the user may install an application commonly used in the first terminal into the second terminal in the foregoing manner, thereby simplifying an application installation process in the second terminal. However, in this method, it is required that a same browser application be installed in the first terminal and the second terminal, and the user needs to actively trigger cross-device application installation. In addition, the method only simplifies the application installation process of the second terminal, but does not implement promotion of more applications.

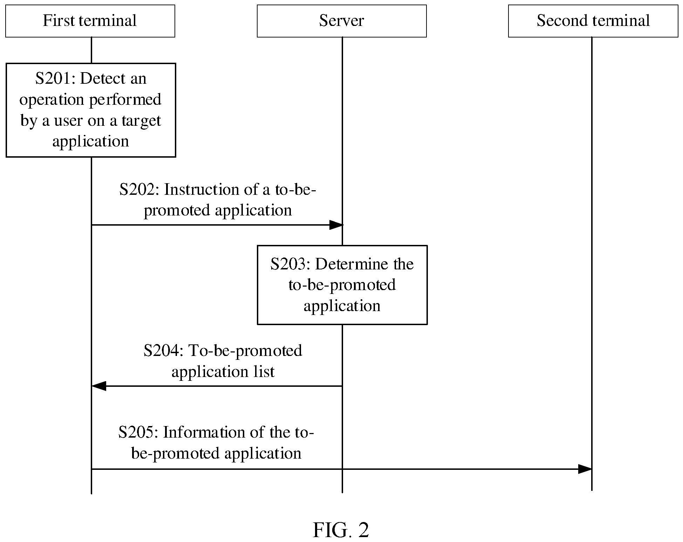

For another example, as shown in FIG. 2, when detecting an operation performed by a user on a target application, a first terminal may establish a hotspot connection with a second terminal, and send an instruction of a to-be-promoted application to a server (that is, steps S201 and S202). Then, in response to the instruction of the to-be-promoted application, the server may determine the to-be-promoted application, and send a to-be-promoted application list to the first terminal (that is, steps S203 and S204). Then, the first terminal may determine, based on the to-be-promoted application list, an application that has been installed in the first terminal but is not installed in the second terminal, and determine the application as a final to-be-promoted application. Then, when sharing a file or digital content with the second terminal, the first terminal may carry information of the to-be-promoted application, for example, an installation package (that is, step S205), to induce the second terminal to install the to-be-promoted application.

In this way, the application installed in the first terminal is recommended to the second terminal for installation, thereby simplifying application installation steps in the second terminal. However, in this method, the second terminal can install only the application that has been installed in the first terminal and does not have a function of recommending more applications.

It can be learned that in the two scenarios of the foregoing examples, although application recommendation between the two terminal devices is involved, the recommended application has a large limitation and cannot meet a usage requirement of the user. In addition, in an existing widely popular multi-terminal interaction scenario, advantages of multi-terminal interaction cannot be well used.

In this case, an embodiment of this application provides a promotion method. When a first condition is met, a first electronic device sends, to a server, information of the first electronic device and information of a second electronic device connected to the first electronic device, and the server may promote an application to the first electronic device based on information of a plurality of electronic devices. In this way, in the multi-terminal interaction scenario, the first electronic device can obtain the promotion application that better meets the user requirement, thereby improving a conversion rate of the promotion application.

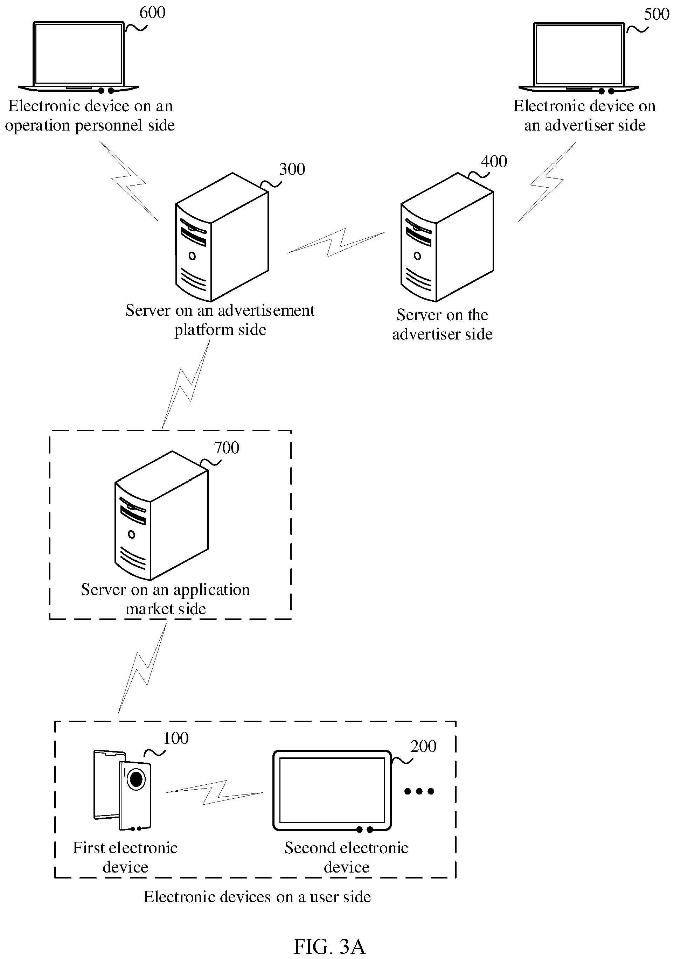

FIG. 3A is a schematic diagram of a communication system to which a promotion method is applied according to an embodiment of this application. As shown in FIG. 3A, the communication system includes electronic devices on a user side, a server 300 on an advertisement platform side, a server 400 on an advertiser side, an electronic device 500 on the advertiser side, and an electronic device 600 on an operation personnel side.

The electronic devices on the user side include a first electronic device 100 and at least one second electronic device 200. The first electronic device 100 is an electronic device in which application promotion is to be performed. The second electronic device 200 is an electronic device that wirelessly establishes a communication connection with the first electronic device 100. A wireless communication technology for establishing a wireless communication connection includes but is not limited to at least one of the following: Bluetooth (Bluetooth, BT) (for example, conventional Bluetooth or Bluetooth low energy (Bluetooth low energy, BLE)), a wireless local area network (wireless local area network, WLAN) (for example, a wireless fidelity (wireless fidelity, Wi-Fi) network), near field communication (near field communication, NFC), Zigbee (Zigbee), frequency modulation (frequency modulation, FM), infrared (infrared, IR), and the like.

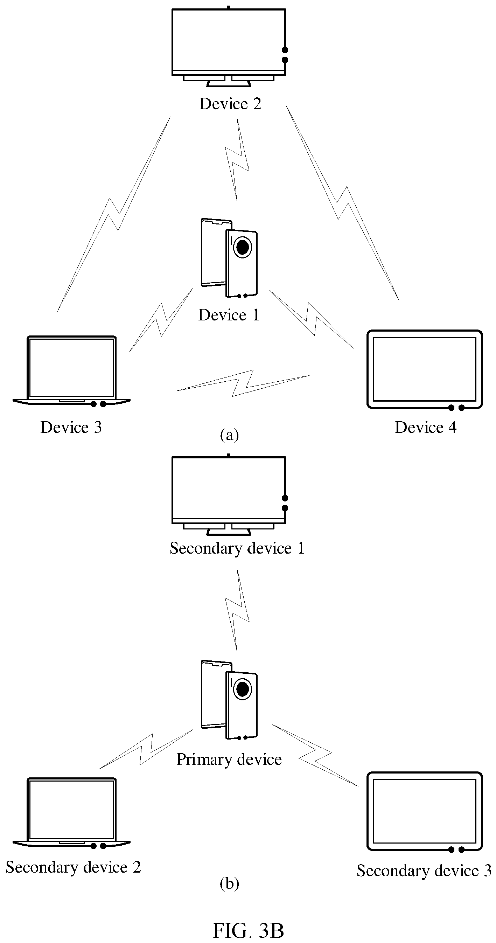

In some embodiments, the first electronic device 100 and the second electronic device 200 form a promotion group. For example, as shown in (a) in FIG. 3B, in a multi-terminal interaction scenario, a device 1, a device 2, a device 3, and a device 4 separately establish a communication connection, and every two of the devices form a promotion group of each other. Alternatively, as shown in (b) inFIG. 3B, in a multi-terminal interaction scenario, each device uses a device as a primary device, and the primary device and a secondary device form a promotion group. When determining that application promotion needs to be performed, the first electronic device 100 may obtain a corresponding promotion application in a manner of any one of the foregoing promotion groups, with reference to information (such as device information, and scenario information of the first electronic device 100) of the first electronic device 100 and information (such as application usage information of the second electronic device 200) of one or more second electronic devices 200 in a promotion group.

In some examples, after determining to establish a communication connection with the second electronic device 200, the first electronic device 100 sends an advertisement request to the server 300 on the advertisement platform side, to obtain recommended content. Alternatively, after detecting an operation performed by a user on the first electronic device 100, the first electronic device 100 may send an advertisement request to the server 300 on the advertisement platform side, to obtain recommended content.

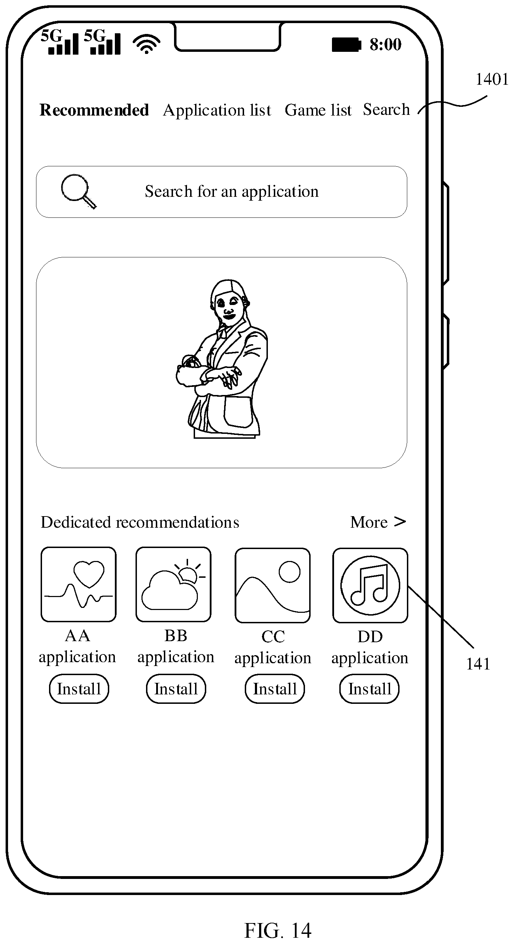

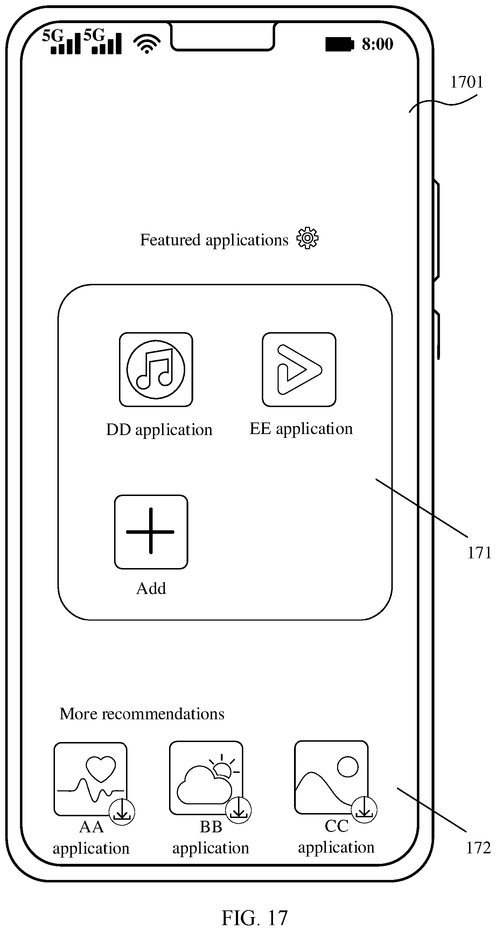

For example, in response to the communication connection established with the second electronic device 200, the first electronic device 100 sends an application recommendation list obtaining request to the server 300 on the advertisement platform side, to obtain an application recommendation list. For example, as shown in FIG. 17, in response to an operation of opening a cloud folder by the user, the first electronic device 100 sends the application recommendation list obtaining request to the server 300 on the advertisement platform side, to request to obtain an icon of a to-be-displayed recommended application. In some other examples, the communication system may further include a server 700 on an application market side. For example, an interface 1401 shown in FIG. 14 is used to display a home page of an application market. The home page of the application market displays a to-be-recommended application indicated by a reference numeral 141, and also displays other display content such as a picture and a text. In this case, in a process of displaying the application market, the first electronic device 100 needs to obtain a recommended application and other display content. The first electronic device 100 may send the application recommendation list obtaining request to the server 700 on the application market side, and the server 700 on the application market side determines the recommended application and the other display content.

For example, after detecting an operation of starting the application market by the user, the first electronic device 100 sends the application recommendation list obtaining request to the server 700 on the application market side. In response to the received application recommendation list obtaining request, the server 700 on the application market side forwards the application recommendation list obtaining request to the server 300 on the advertisement platform side, to obtain the application recommendation list. In this way, subsequently, the first electronic device 100 may display the recommended application on an application market interface.

It needs to be noted that, if the first electronic device 100 also has other display content that needs to be determined by a server on an interface for determining to-be-displayed recommended content, the first electronic device 100 may send a request to the corresponding server. Then, the server requests the server 300 on the advertisement platform side to obtain the recommended content. To be specific, in the communication system shown in FIG. 3A, the server 700 on the application market side is an optional server, and the server may be another server.

Optionally, the electronic device (for example, the first electronic device 100, the second electronic device 200, the electronic device 500 on the advertiser side, or the electronic device 600 on the operation personnel side), for example, may be a terminal device such as a mobile phone, a computer, a tablet computer, a notebook computer, an ultra-mobile personal computer (ultra-mobile personal computer, UMPC), a netbook, a personal digital assistant (personal digital assistant, PDA), a wearable device, or an artificial intelligence (artificial intelligence, AI) device. An operating system installed in the electronic device includes but is not limited to iOS^{®}, Android^{®}, Harmony^{®}, Windows^{®}, Linux^{®}, or another operating system. A specific type of the electronic device and an operating system installed in the electronic device are not limited in this application.

Optionally, the server (for example, the server 300 on the advertisement platform, the server 400 on the advertiser side, or the server 700 on the application market side) may be a device or a server that has a computing function, such as a cloud server or a network server. The server may be a single server, a server cluster including a plurality of servers, or a cloud computing service center.

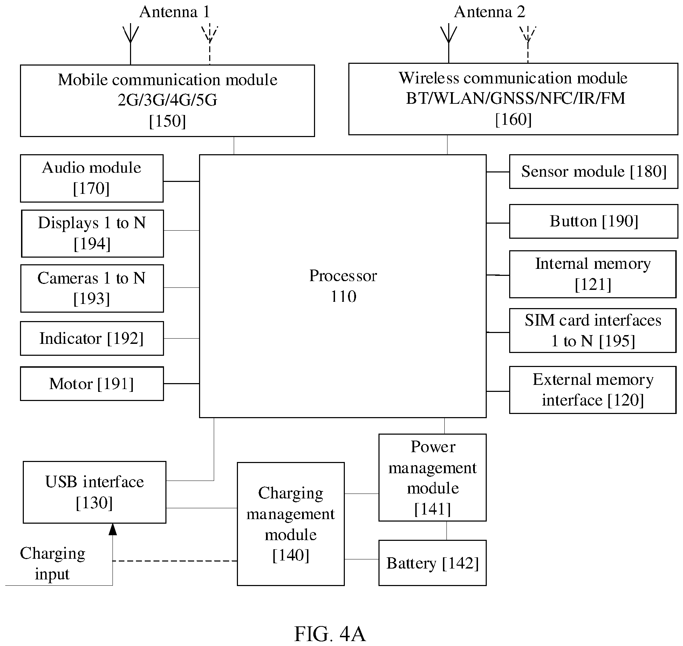

For example, FIG. 4A is a schematic diagram of a structure of an electronic device (for example, the first electronic device 100, the second electronic device 200, the electronic device 500 on the advertiser side, or the electronic device 600 on the operation personnel side).

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identity module (subscriber identity module, SIM) card interface 195, and the like.

It may be understood that the structure shown in this embodiment of this application does not constitute a specific limitation on the electronic device. In some other embodiments of this application, the electronic device may include more or fewer components than those shown in the figure, or combine some components, or split some components, or have a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing processor (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to USB standard specifications, and may be specifically a mini USB interface, a micro USB interface, a USB Type-C interface, or the like. The USB interface 130 may be configured to connect to a charger to charge the electronic device, may be configured to perform data transmission between the electronic device and a peripheral device, or may be configured to connect to a headset for playing audio through the headset. The interface may be further configured to connect to another electronic device such as an AR device.

It may be understood that, an interface connection relationship between the modules shown in this embodiment of this application is merely an example for description, and does not constitute a limitation on the structure of the electronic device. In some other embodiments of this application, the electronic device may alternatively use an interface connection different from that in the foregoing embodiment, or a combination of a plurality of interface connections.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device. The charging management module 140 may further supply power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electricity leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device may be configured to cover one or more communication frequency bands. Different antennas may be further multiplexed to improve antenna utilization. For example, the antenna 1 may be multiplexed as a diversity antenna in a wireless local area network. In some other embodiments, the antenna may be used in combination with a tuning switch.

The mobile communication module 150 may provide a solution that includes wireless communication such as 2G/3G/4G/5G and that is applied to the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device with at least some modules of the processor 110.

The wireless communication module 160 may provide a wireless communication solution that is applied to the electronic device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering on an electromagnetic wave signal, and sends the processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology. The wireless communication technology may include a global system for mobile communications (global system for mobile communications, GSM), a general packet radio service (general packet radio service, GPRS), code-division multiple access (code-division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device implements a display function by using the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs that execute program instructions to generate or change display information.

The display 194 is configured to display an image, a video, and the like. The display 194 includes a display panel. The display panel may be manufactured by using a liquid crystal display (liquid crystal display, LCD), for example, an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device may include one or N displays 194, where N is a positive integer greater than 1.

In some embodiments, when detecting that a communication connection is established with the second electronic device 200, the first electronic device 100 may send information of the first electronic device 100 and information of the second electronic device 200 to a server, to request to obtain a promotion application. Then, after obtaining the promotion application, the first electronic device 100 may display the promotion application on the display 194 in a display manner indicated by the server.

In some embodiments, in a process of displaying the promotion application on the display 194, the first electronic device 100 detects an operation on the promotion application, and determines whether the promotion application is installed in the first electronic device 100. If the promotion application has been installed, the first electronic device 100 may request a server on an advertiser side to display a corresponding landing page. If the promotion application is not installed, the first electronic device 100 may request a server on an advertisement platform side to download the promotion application.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a format such as standard RGB or YUV. In some embodiments, the electronic device may include one or N cameras 193, where N is a positive integer greater than 1.

The external memory interface 120 may be configured to connect to an external storage card, for example, a micro SD card, to extend a storage capability of the electronic device. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) and the like created during usage of the electronic device. In addition, the internal memory 121 may include a high-speed random access memory, and may further include a non-volatile memory, for example, at least one magnetic disk storage device, a flash storage device, and a universal flash storage (universal flash storage, UFS). The processor 110 runs the instructions stored in the internal memory 121 and/or the instructions stored in the memory disposed in the processor, to execute various function applications of the electronic device and data processing.

The audio module 170 is configured to convert digital audio information into an analog audio signal output, and is also configured to convert an analog audio input into a digital audio signal. The audio module 170 may be further configured to code and decode an audio signal. In some embodiments, the audio module 170 may be disposed in the processor 110, or some functional modules of the audio module 170 are disposed in the processor 110. The electronic device may use the audio module 170, for example, for music playing or recording. The audio module 170 may include a speaker, a receiver, a microphone, a headset jack, an application processor, and the like to implement an audio function.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The touch sensor is also referred to as a "touch control device". The touch sensor may be disposed in the display 194, and the touch sensor and the display 194 form a touchscreen, which is also referred to as a "touch control screen". The touch sensor is configured to detect a touch operation performed on or near the touch sensor. The touch sensor may transfer the detected touch operation to the application processor, to determine a type of a touch event. A visual output related to the touch operation may be provided through the display 194. In some other embodiments, the touch sensor may alternatively be disposed on a surface of the electronic device at a location different from that of the display 194.

The button 190 includes a power button, a volume button, and the like. The button 190 may be a mechanical button or a touch button. The electronic device may receive a button input, and generate a button signal input related to user settings and function control of the electronic device.

The motor 191 may generate a vibration prompt. The motor 191 may be configured to provide an incoming call vibration prompt or a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device. The electronic device may support one or N SIM card interfaces, where N is a positive integer greater than 1.

A software system of the electronic device may use a layered architecture, an event-driven architecture, a microkernel architecture, a microservice architecture, or a cloud architecture. In embodiments of this application, an Android system with a layered architecture is used as an example for describing a software structure of the electronic device.

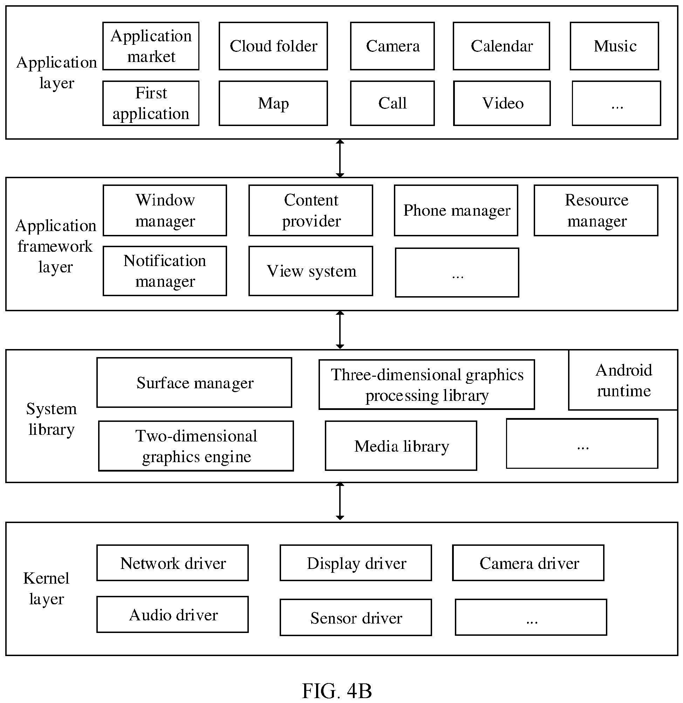

FIG. 4B is a block diagram of a software structure of an electronic device (for example, the first electronic device 100, the second electronic device 200, the electronic device 500 on the advertiser side, or the electronic device 600 on the operation personnel side) according to an embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 4B, the application package may include applications such as Application market, Cloud folder, Camera, Gallery, Calendar, Call, Map, Navigation, WLAN, Bluetooth, Music, Video, and Messaging.

In some embodiments, after obtaining a promotion application, the first electronic device 100 may display the promotion application in a plurality of manners such as an application market, a cloud folder, a pop-up window, and a screen advertisement page.

The application framework layer provides an application programming interface (application programming interface, API) and a programming framework for an application at the application layer. The application framework layer includes some predefined functions.

As shown in FIG. 4B, the application framework layer may include a window manager, a content provider, a view system, a phone manager, a resource manager, a notification manager, and the like.

The window manager is configured to manage a window program. The window manager may obtain a display size, determine whether there is a status bar, lock a screen, take a screenshot, and the like.

The content provider is configured to store and obtain data, and enable the data to be accessed by an application. The data may include a video, an image, audio, calls that are made and answered, a browsing history and a bookmark, a phone book, and the like.

The view system includes visual controls such as a control for displaying a text and a control for displaying a picture. The view system may be configured to construct an application. A display interface may include one or more views. For example, a display interface including an SMS message notification icon may include a view for displaying a text and a view for displaying a picture.

The phone manager is configured to provide a communication function of the electronic device, for example, management of a call status (including answering, hanging up, or the like).

The resource manager provides various resources such as a localized character string, an icon, a picture, a layout file, and a video file for an application.

The notification manager enables an application to display notification information in a status bar, and may be configured to convey a notification message that may automatically disappear after a short pause without requiring user interaction. For example, the notification manager is configured to notify download completion, provide a message notification, and the like. The notification manager may alternatively be a notification that appears in a top status bar of the system in a form of a graph or a scroll bar text, for example, a notification of an application running on a background or a notification that appears on a screen in a form of a dialog window. For example, text information is prompted in the status bar, a prompt tone is played, the electronic device vibrates, or an indicator light blinks.

The Android runtime includes a core library and a virtual machine. The Android runtime is responsible for scheduling and managing the Android system.

The core library includes two parts: One part is a function that needs to be invoked by a Java language, and the other part is a core library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a two-dimensional graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for 2D drawing.

The kernel layer is a layer between hardware and software. The kernel layer includes at least a display driver, a camera driver, an audio driver, and a sensor driver.

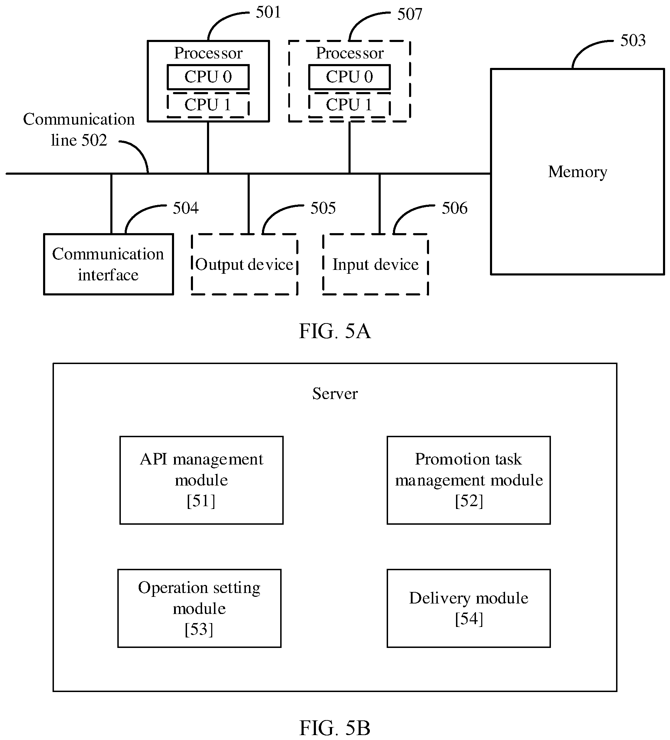

For example, FIG. 5A is a schematic diagram of a structure of a server (for example, the server 300 on the advertisement platform side, the server 400 on the advertiser side, or the server 700 on the application market side).

The server includes at least one processor 501, a communication line 502, a memory 503, and at least one communication interface 504. The memory 503 may further be included in the processor 501.

The processor 501 may be a general-purpose central processing unit (central processing unit, CPU), a microprocessor, an application-specific integrated circuit (application-specific integrated circuit, ASIC), or one or more integrated circuits that are configured to control execution of a program in the solutions in this application.

The communication line 502 may include one or more paths for transmitting information between the foregoing components.

The communication interface 504 is configured to communicate with another device. In embodiments of this application, the communication interface may be a module, a circuit, a bus, an interface, a transceiver, or another apparatus that can implement a communication function, and is configured to communicate with another device. Optionally, when the communication interface is a transceiver, the transceiver may be an independently disposed transmitter, and the transmitter may be configured to send information to another device. Alternatively, the transceiver may be an independently disposed receiver, and the receiver is configured to receive information from another device. Alternatively, the transceiver may be a component integrating functions of sending and receiving information. A specific implementation of the transceiver is not limited in embodiments of this application.

The memory 503 may be a read-only memory (read-only memory, ROM) or another type of a static storage device that can store static information and instructions, or a random access memory (random access memory, RAM) or another type of a dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that is accessible to a computer, but is not limited thereto. The memory may exist independently, and is connected to the processor through the communication line 502. The memory may alternatively be integrated with the processor.

In some embodiments, the server may communicate with an electronic device through the communication interface 504. For example, the server 300 on the advertisement platform side receives, through the communication interface 504, an application recommendation list obtaining request sent by the first electronic device 100 on the user side. Then, the server 300 on the advertisement platform side may determine a promotion application through the processor 501, and deliver the promotion application to the first electronic device 100 through the communication interface 504, to display the promotion application on the first electronic device 100.

In some embodiments, the server may store an API created by an advertiser, a promotion task created by the advertiser, an installation package of an application released by an application developer, and the like through the memory 503.

The memory 503 is configured to store computer-executable instructions for executing the solutions in this application, and the processor 501 controls the execution. The processor 501 is configured to execute the computer-executable instructions stored in the memory 503, to implement the promotion methods provided in the following embodiments of this application.

Optionally, the computer-executable instructions in embodiments of this application may also be referred to as application code, instructions, a computer program, or another name. This is not specifically limited in embodiments of this application.

During specific implementation, in an embodiment, the processor 501 may include one or more CPUs, for example, a CPU 0 and a CPU 1 in FIG. 5A.

During specific implementation, in an embodiment, the server may include a plurality of processors, for example, the processor 501 and a processor 507 in FIG. 5A. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the server may further include an output device 505 and an input device 506. The output device 505 communicates with the processor 501, and may display information in a plurality of manners. For example, the output device 505 may be a liquid crystal display (liquid crystal display, LCD), a light-emitting diode (light-emitting diode, LED) display device, a cathode ray tube (cathode ray tube, CRT) display device, a projector (projector), or the like. The input device 506 communicates with the processor 501, and may receive a user input in a plurality of manners. For example, the input device 506 may be a mouse, a keyboard, a touchscreen device, a sensor device, or the like.

FIG. 5B is a block diagram of a software structure of a server (for example, the server 300 on the advertisement platform side or the server 400 on the advertiser side) according to an embodiment of this application.

For example, as shown in FIG. 5B, the server includes an API management module 51, a promotion task management module 52, an operation setting module 53, and a delivery module 54.

Optionally, the API management module 51 may be configured to create, commission, and manage an API by an advertiser.

In some examples, as shown in FIG. 3A, the advertiser may use the electronic device 500 on the advertiser side via a browser to log in to an API management web page managed by the API management module 51 in the server 400 on the advertiser side, to create an API and manage the created API.

In some examples, the API management module 51 may be further configured to commission the API created by the advertiser, and save the created API after determining that the API is successfully commissioned and is available.

In some examples, the API management module 51 may further send the API created by the advertiser to the operation setting module 53. The operation setting module 53 may be configured to prompt an operation personnel to review the API.

Optionally, the promotion task management module 52 may be configured to create and manage an application promotion task.

In some examples, as shown in FIG. 3A, the advertiser may use the electronic device 500 on the advertiser side via the browser to log in to a promotion task management web page managed by the promotion task management module 52 in the server 400 on the advertiser side, to create and manage an application promotion task.

In some examples, the promotion task management module 52 may receive the promotion task created by the advertiser. The promotion task includes, for example, an application selected by the advertiser for promotion, information (for example, a text, a picture, or a video) displayed by the promotion application, an address of a landing page to be jumped to, whether to launch a quick application by default, price information, and the like. Optionally, the promotion task management module 52 may obtain, from the API management module 51, APIs created by the advertiser, and then determine that a user selects a created API. The promotion task may include the API.

In some examples, the promotion task management module 52 may further send the promotion task created by the advertiser to the operation setting module 53. The operation setting module 53 may be configured to prompt the operation personnel to review the promotion task. After the promotion task is approved, the server may promote, at a corresponding promotion location based on task information of the promotion task, an application corresponding to the promotion task.

Optionally, the operation setting module 53 may be configured to review the API and the promotion task that are created by the advertiser.

In some examples, the operation personnel may use the operation setting module 53 of the server to set, in different service scenarios and electronic device types, which types of electronic devices can be used to display the promotion task at which locations. For example, the operation personnel can set a mobile phone to display the promotion task in a pop-up window, an application market, and a cloud folder.

Optionally, the delivery module 54 may be configured to match the promotion task based on obtained electronic device information through the promotion task management module 52. After the promotion task is matched, the delivery module 54 may determine a ranking of the promotion application in an application recommendation list based on a price offered by the advertiser. A higher price offered by the advertiser indicates a higher ranking of the application in the application recommendation list and a larger probability that the application is discovered by the user. Then, the delivery module 54 may send the application recommendation list to the electronic device, and the electronic device may display the promotion application in the application recommendation list at a corresponding display location.

It should be understood that the server is not limited to the modules shown in FIG. 5B, and may further include more or fewer modules.

In some embodiments, the advertiser needs to create the API in advance, and add the API to the created promotion task. An API creation process includes a process of entering API configuration information. The API configuration information may include an API name, an API request type, an API address, an API parameter, and the like. The advertiser may commission the created API. The API creation process may also include an API commissioning process. After the API is commissioned and approved, it can be added to the promotion task.

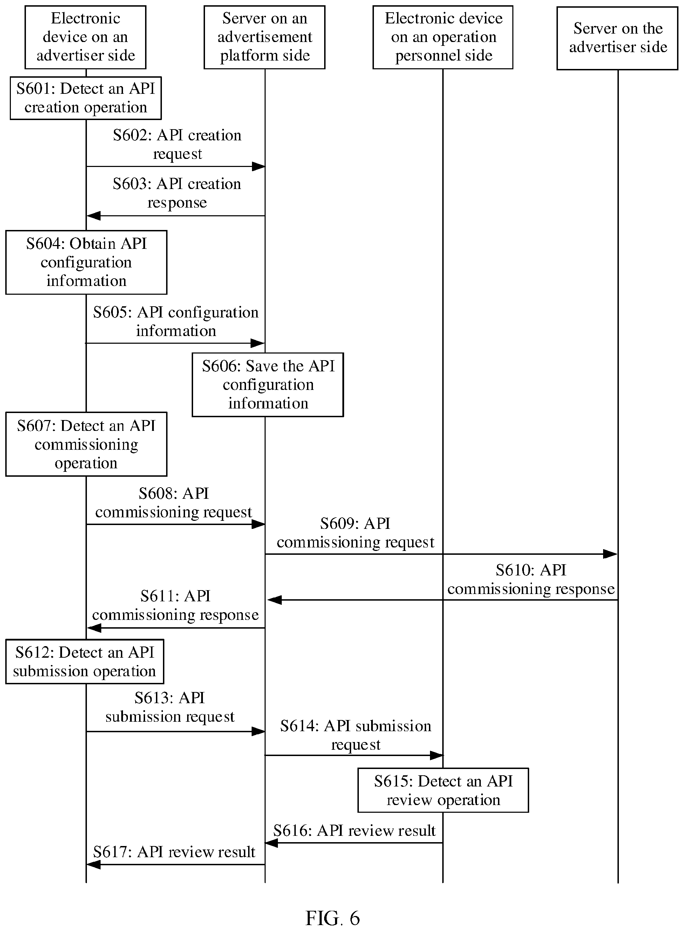

For example, FIG. 6 is a schematic flowchart of a promotion method according to an embodiment of this application. As shown in FIG. 6, the method includes the following steps.

S601: An electronic device on an advertiser side detects an API creation operation.

In some embodiments, before determining to create a promotion task, an advertiser needs to create an API corresponding to the promotion task. The API may be used by an electronic device on a user side to subsequently request a server on the advertiser side to display an application landing page or a commodity landing page corresponding to the promotion task. The landing page is used to display an advertisement page of a promotion application or commodity.

Optionally, the advertiser may use the electronic device on the advertiser side via a browser to log in to an API management web page provided by a server on an advertisement platform side, and complete API creation on the API management web page.

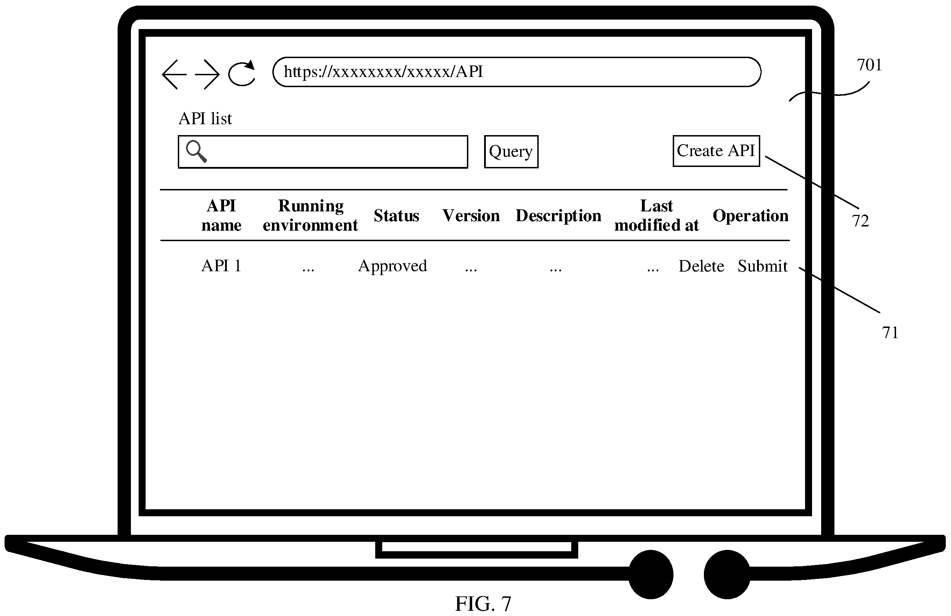

For example, as shown in FIG. 7, a browser application in the electronic device on the advertiser side may display an interface 701 in response to an operation that the advertiser indicates to log in to the API management web page, for example, an operation of entering a website address of the API management web page and indicating to jump. On the interface 701, the advertiser may create and manage an API. As shown in the interface 701, the electronic device on the advertiser side displays an API list, including a created API. As shown in a reference numeral 71, an API 1 has been created, and the advertiser may delete the API 1.

On the interface 701, the electronic device on the advertiser side detects an operation of tapping a create API control 72 by the advertiser, and may determine that the advertiser indicates to create an API.

It should be understood that an API management tool provided by an application market party for the advertiser is not limited in embodiments of this application. In addition to the API management web page, the application market party may further provide another application for the advertiser to manage an API. In embodiments of this application, the API management web page is specifically used as an example for description.

S602: The electronic device on the advertiser side sends an API creation request to the server on the advertisement platform side.

In some embodiments, after detecting the API creation operation, the electronic device on the advertiser side sends the API creation request to the server on the advertisement platform side, to execute an API creation process. Correspondingly, the server on the advertisement platform side receives the API creation request sent by the electronic device on the advertiser side.

For example, as shown in FIG. 7, in response to the operation of tapping the create API control 72 by the advertiser, the electronic device on the advertiser side sends the API creation request to the server on the advertisement platform side.

S603: The server on the advertisement platform side sends an API creation response to the electronic device on the advertiser side.

In some embodiments, after receiving the API creation request, the server on the advertisement platform side may send the API creation response to the electronic device on the advertiser side. The API creation response may carry website address information, and the website address information is used to enable the electronic device on the advertiser side to display a corresponding web page, to collect API configuration information.

Correspondingly, the electronic device on the advertiser side receives the API creation response sent by the server on the advertisement platform side.

S604: The electronic device on the advertiser side obtains the API configuration information.

In some embodiments, after receiving the API creation response, the electronic device on the advertiser side displays the corresponding web page based on the website address information carried in the API creation response, and collects the API configuration information on the web page.

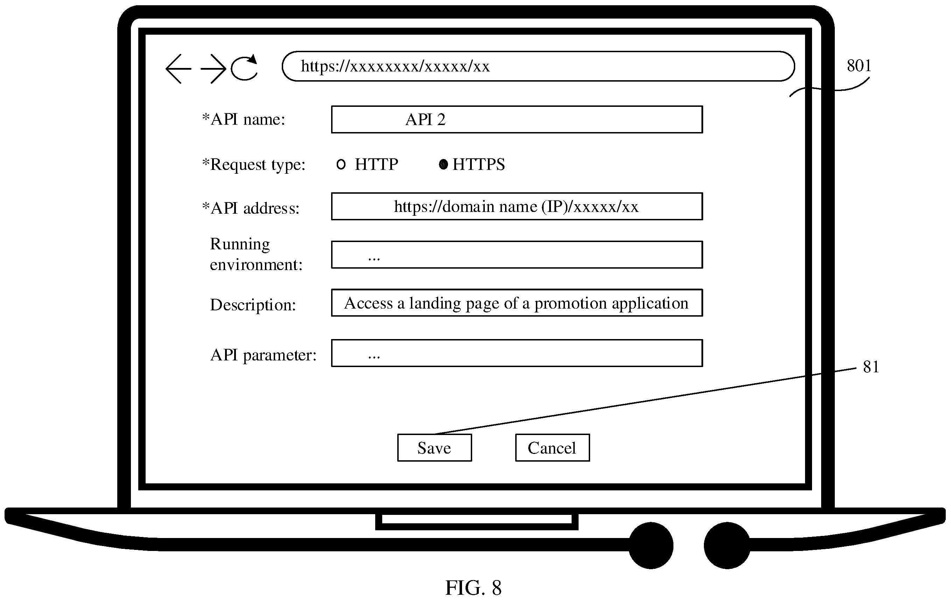

For example, as shown in FIG. 8, the electronic device on the advertiser side displays an interface 801 based on the received website address information, and the advertiser may enter the API configuration information on the interface 801. The API configuration information includes, for example, an API name, a request type, an API address, a running environment, a description, an API parameter, and the like.

The API name is a name that is of the currently created API and that is set by the advertiser. As shown in the interface 801, the API name is an API 2.

The request type may be used to enter a protocol used for requesting the API, for example, HTTP or HTTPS.

The API address may be used to enter an API address of the API. The API address may be used to invoke the API. The API address usually contains a domain name and a path. For example, the API address is "https://domain name (IP)/xxxxx/xx". The API address entered by the advertiser can be accessed by the server 300 on the advertisement platform side. For example, the advertiser may open a public network capability, so that the server 300 on the advertisement platform side can access the API address through the public network. For another example, the advertiser may set a specified gateway, and configure an access whitelist for the specified gateway or provide corresponding permission for the server 300 on the advertisement platform side, so that the server 300 on the advertisement platform side can access the API address through the specified gateway.

The running environment may be used to enter a running environment of the API.

The description may be used to enter a related description of the API. For example, the related description of the API is "access a landing page of a promotion application". It can be learned that the related description of the API may be used to describe a function that can be implemented by the API.

The API parameter may be used to enter an API request parameter of the API, such as an electronic device model, a recharge amount, an account identifier, or other information.

In some embodiments, the setting option marked with an asterisk (*) may indicate that the setting option is a mandatory item. That is, content corresponding to the mandatory item needs to be set during API creation. The setting option not marked with an asterisk (*) is an optional item.

It should be understood that, in addition to the API configuration information that needs to be entered in FIG. 8, the advertiser may further enter more or less configuration information in the API creation process.

S605: The electronic device on the advertiser side sends the API configuration information to the server on the advertisement platform side.

In some embodiments, after determining that the API configuration information is collected, the electronic device on the advertiser side may send the collected API configuration information to the server on the advertisement platform side. Correspondingly, the server on the advertisement platform side receives the API configuration information sent by the electronic device on the advertiser side.

For example, on the interface 801 shown in FIG. 8, after detecting an operation of tapping a save control 81 by the advertiser, the electronic device on the advertiser side may determine that the API configuration information is collected. Then, the electronic device on the advertiser side may send the collected API configuration information to the server on the advertisement platform side.

S606: The server on the advertisement platform side saves the API configuration information.

In some embodiments, after receiving the API configuration information, the server on the advertisement platform side may save the API configuration information.

For example, as shown in FIG. 5B, the server receives and saves, through the API management module 51, the API configuration information sent by the electronic device on the advertiser side, to complete API creation.

S607: The electronic device on the advertiser side detects an API commissioning operation.

In some embodiments, after the API is created, the API needs to be commissioned, to ensure that the API can be normally accessed.

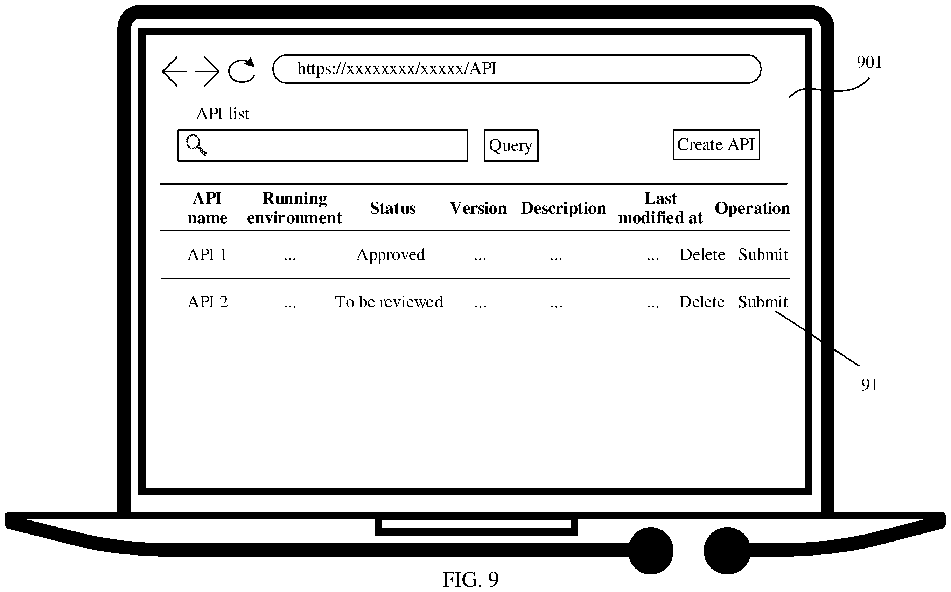

For example, on an interface 901 shown in FIG. 9, after the server on the advertisement platform side saves the API configuration information, the electronic device on the advertiser side logs in to the API management web page again, and may display a newly created API, for example, an API 2. A status of the API 2 is to be reviewed. Then, the electronic device on the advertiser side detects an operation of tapping a submit control 91 by the advertiser, and may determine that the advertiser indicates to commission the API 2 corresponding to the submit control 91.

S608: The electronic device on the advertiser side sends an API commissioning request to the server on the advertisement platform side.

In some embodiments, in response to the API commissioning operation of the advertiser, the electronic device on the advertiser side sends the API commissioning request to the server on the advertisement platform side. Optionally, the API commissioning request carries information of the to-be-commissioned API.

Correspondingly, the server on the advertisement platform side receives the API commissioning request sent by the electronic device on the advertiser side.

S609: The server on the advertisement platform side sends the API commissioning request to the server on the advertiser side.

In some embodiments, after receiving the API commissioning request, the server on the advertisement platform side forwards the API commissioning request to the server on the advertiser side. Correspondingly, the server on the advertiser side receives the API commissioning request sent by the server on the advertisement platform side.

S610: The server on the advertiser side sends an API commissioning response to the server on the advertisement platform side.

In some embodiments, the server on the advertiser side receives the API commissioning request, and may commission the corresponding API. After the commissioning is completed, the server on the advertiser side may send the API commissioning response to the server on the advertisement platform side. The API commissioning response carries an API commissioning result, and indicates whether the API is available.

Correspondingly, the server on the advertisement platform side receives the API commissioning response sent by the server on the advertiser side.

S611: The server on the advertisement platform side sends the API commissioning response to the electronic device on the advertiser side.

In some embodiments, after receiving the API commissioning response, the server on the advertisement platform side forwards the API commissioning response to the electronic device on the advertiser side. Correspondingly, the electronic device on the advertiser side receives the API commissioning response sent by the server on the advertisement platform side.

S612: The electronic device on the advertiser side detects an API submission operation.

In some embodiments, after the API is commissioned, the API may be submitted to an operation personnel for review, to ensure API compliance.

S613: The electronic device on the advertiser side sends an API submission request to the server on the advertisement platform side.

In some embodiments, in response to the detected API submission operation, the electronic device on the advertiser side sends the API submission request to the server on the advertisement platform side. Correspondingly, the server on the advertisement platform side receives the API submission request sent by the electronic device on the advertiser side.

S614: The server on the advertisement platform side sends the API submission request to an electronic device on an operation personnel side.

In some embodiments, after receiving the API submission request, the server on the advertisement platform side sends the API submission request to the electronic device on the operation personnel side, to prompt the operation personnel to review the API corresponding to the API submission request. Correspondingly, the electronic device on the operation personnel side receives the API submission request sent by the server on the advertisement platform side.

S615: The electronic device on the operation personnel side detects an API review operation.

In some embodiments, the operation personnel may review the API by using the electronic device on the operation personnel side. The electronic device on the operation personnel side may receive the review operation of the operation personnel.

Optionally, in an API review process, the operation personnel may review whether the API name is appropriate, whether the API request type is appropriate, whether the API address is appropriate, and the like.

It should be understood that content to be reviewed is not limited in embodiments of this application.

S616: The electronic device on the operation personnel side sends an API review result to the server on the advertisement platform side.

In some embodiments, after determining that the operation personnel may complete the API review, the electronic device on the operation personnel side may generate a corresponding API review result, and send the API review result to the server on the advertisement platform side. Correspondingly, the server on the advertisement platform side receives the API review result sent by the electronic device on the operation personnel side.

S617: The server on the advertisement platform side sends the API review result to the electronic device on the advertiser side.

In some embodiments, after receiving the API review result, the server on the advertisement platform side may forward the API review result to the electronic device on the advertiser side. Then, the advertiser may confirm the API review result on the electronic device on the advertiser side. If the API review is approved, the advertiser may deliver the promotion task subsequently. If the API review is not approved, the advertiser may modify the API configuration information, and then perform steps S604 to S617 again to complete commissioning and review of the modified API.

In this way, the advertiser may perform the foregoing steps to complete API creation based on a requirement. The following describes in detail a process of creating a promotion task by an advertiser.

In some embodiments, an application developer may release, in an application market, an application developed by the application developer. To publicize the application and attract more users to install and use the application, the application developer may pay an application market party for asking the application market party to promote the application. The application developer who pays the application market party for asking the application market party to promote the application may be referred to as an advertiser. The advertiser needs to create a promotion task and provides promotion task information for the application market party. The application market party may review the promotion task based on the promotion task information. After the review is approved, the application market party may promote a corresponding application based on the promotion task.

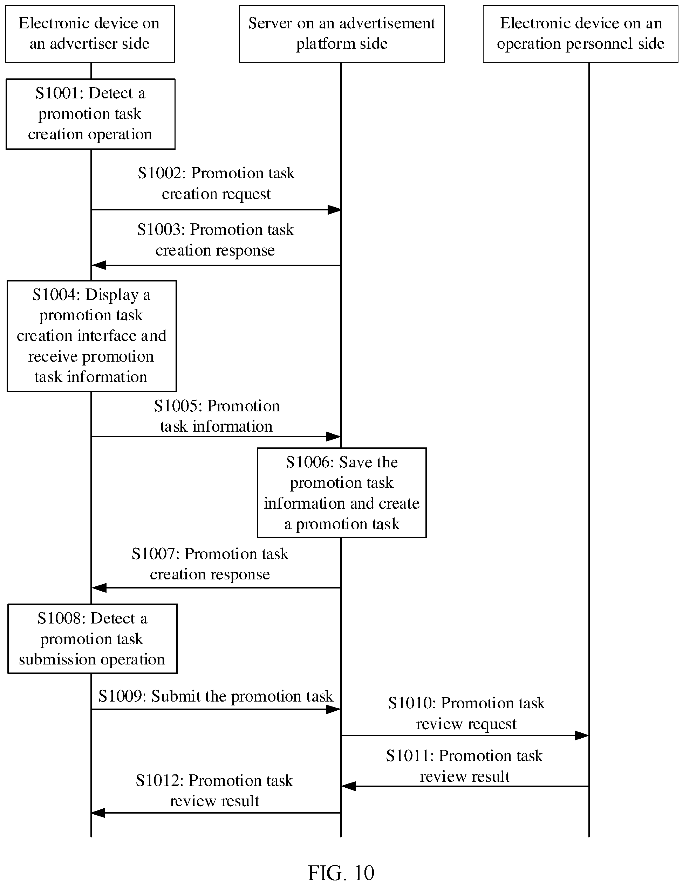

For example, FIG. 10 is a schematic flowchart of still another promotion method according to an embodiment of this application. As shown in FIG. 10, the method includes the following steps.

S1001: An electronic device on an advertiser side detects a promotion task creation operation.

In some embodiments, after creating an API, an advertiser may create a promotion task. Optionally, the advertiser may use the electronic device on the advertiser side via a browser to log in to a promotion task management web page provided by a server on an advertisement platform side, and complete promotion task creation on the promotion task management web page.

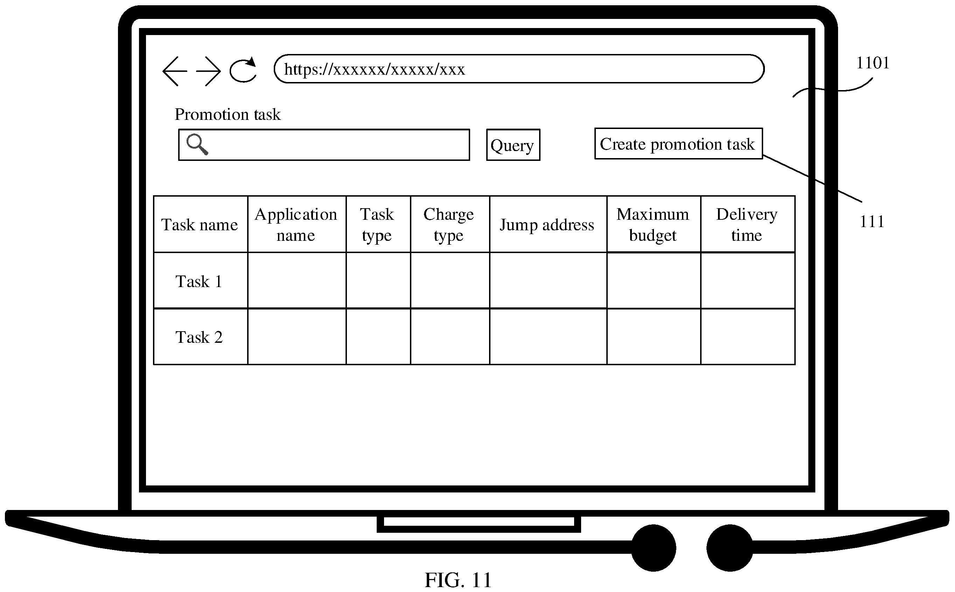

For example, as shown in FIG. 11, a browser application in the electronic device on the advertiser side may display an interface 1101 in response to an operation that the advertiser indicates to log in to the promotion task management web page, for example, an operation of entering a website address of the promotion task management web page and indicating to jump. On the interface 1101, the advertiser may create and manage a promotion task. As shown in the interface 1101, the electronic device on the advertiser side displays a promotion task list, including created promotion tasks such as a task 1 and a task 2.

On the interface 1101, the electronic device on the advertiser side detects an operation of tapping a create promotion task control 111 by the advertiser, and may determine that the advertiser indicates to create a promotion task.

It should be understood that a promotion task management tool provided by an advertisement platform party for the advertiser is not limited in embodiments of this application. In addition to the promotion task management web page, the advertisement platform party may further provide another tool for the advertiser to manage a promotion task. In embodiments of this application, the promotion task management web page is specifically used as an example for description.

S1002: The electronic device on the advertiser side sends a promotion task creation request to the server on the advertisement platform side.

In some embodiments, after detecting the promotion task creation operation, the electronic device on the advertiser side sends the promotion task creation request to the server on the advertisement platform side, to execute a promotion task creation process. Correspondingly, the server on the advertisement platform side receives the promotion task creation request sent by the electronic device on the advertiser side.

For example, as shown in FIG. 11, in response to the operation of tapping the create promotion task control 111 by the advertiser, the electronic device on the advertiser side sends the promotion task creation request to the server on the advertisement platform side.

S1003: The server on the advertisement platform side sends a promotion task creation response to the electronic device on the advertiser side.

In some embodiments, after receiving the promotion task creation request, the server on the advertisement platform side may send the promotion task creation response to the electronic device on the advertiser side. The promotion task creation response may carry website address information, and the website address information is used to enable the electronic device on the advertiser side to display a corresponding web page, to collect promotion task information.

Correspondingly, the electronic device on the advertiser side receives the promotion task creation response sent by the server on the advertisement platform side.

S1004: The electronic device on the advertiser side displays a promotion task creation interface and receives the promotion task information.

In some embodiments, after receiving the promotion task creation response, the electronic device on the advertiser side displays a corresponding web page based on the website address information carried in the promotion task creation response, and collects the promotion task information on the web page.

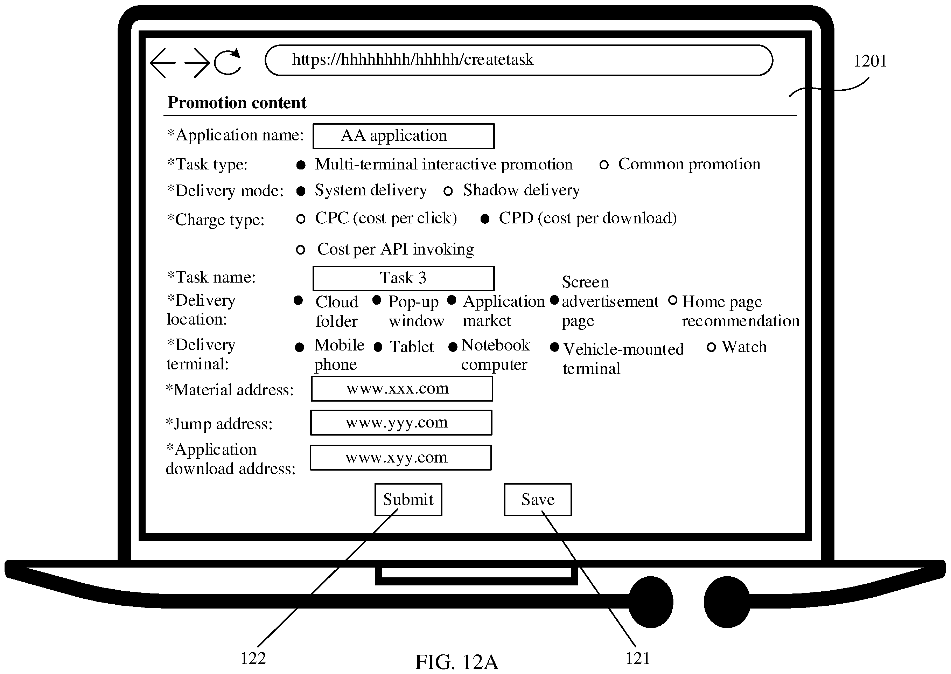

For example, as shown in FIG. 12A, the electronic device on the advertiser side displays an interface 1201 based on the received website address information, and the advertiser may enter the promotion task information on the interface 1201. The promotion task information includes, for example, an application name, a task type, a delivery mode, a charge type, a task name, a delivery location, a delivery terminal, a material address, a jump address, an application download address, and the like.

The application name may be used to enter an identifier of an application that is selected by the advertiser and that needs to be promoted. The identifier may be an application name. For example, an application that needs to be promoted by the promotion task is an "AA application". A type of the identifier of the application is not limited in embodiments of this application. The application selected by the advertiser for promotion is an application that has been released in an application market, is allowed to be downloaded by an electronic device, and has commercial promotion permission.

The task type may be used to enter a task type of the promotion task. For example, the task type includes multi-terminal interactive promotion and common promotion. The multi-terminal interactive promotion indicates that, in an application promotion process, an electronic device that requests a promotion application includes information of a plurality of terminals in a sent request signal, and a server may deliver an application recommendation list based on the information of the plurality of terminals. The common promotion indicates that, in an application promotion process, in response to a request of an electronic device, a server delivers an application recommendation list based on information of the electronic device. For specific content of the multi-terminal interactive promotion, refer to the following specific embodiments. Details are not described herein again. The task type is not limited in embodiments of this application.

The delivery mode may be used to enter a delivery manner of the promotion application. The delivery manner includes, for example, system delivery, shadow delivery, and the like. The system delivery may indicate a delivery manner in which a server pushes an application to a client according to a preset algorithm. The shadow delivery may indicate a delivery manner in which a server determines, based on a target application selected by the advertiser, traffic at a next promotion location of the target application, and calculates a proper price to deliver, to the next promotion location of the target application, an application that the advertiser needs to promote. That is, the advertiser may use the shadow delivery to promote, in the application market, the application that the advertiser needs to promote and the target application selected by the advertiser. The delivery mode is not limited in embodiments of this application. For example, the delivery mode may further include a real-time application programming interface (real-time application programming interface, RTA) delivery mode and the like.

The charge type may be used to enter a charge type of the promotion task. For example, the charge type may include cost per click (cost per click, CPC), cost per download (cost per download, CPD), or cost per API invoking. The charge type is CPC, indicating that an application market party charges a fee each time a promoted application is clicked. The charge type is CPD, indicating that an application market party charges a fee each time a promoted application is downloaded. The charge type is cost per API invoking, indicating that an application market party charges a fee each time an API corresponding to a landing page address of an application is invoked. The charge type CPD is used as an example. For example, a payment amount specified by the advertiser is a payment amount for a single download, such as 1.2 yuan/download, and a specified maximum budget is a maximum payment amount in a unit period. For example, a daily budget is not less than 100 yuan and not greater than 1 million yuan. The charge type is not limited in embodiments of this application.

The task name may be used to enter a name of the promotion task. For example, the name of the promotion task is a "task 3".

The delivery location may be used to enter a location at which the promotion task is delivered. For example, the delivery location includes one or more of an application market, a pop-up window, a cloud folder, a leftmost screen, a screen advertisement page, a home page recommendation, and the like. The advertiser may perform selection based on a location at which the current promotion task needs to be delivered. The delivery location is not limited in embodiments of this application.

The delivery terminal may be used to enter a type of an electronic device for delivering the promotion task. For example, the delivery terminal includes one or more of a mobile phone, a tablet, a notebook computer, a vehicle-mounted terminal, a watch, and the like. The advertiser may perform selection based on a type of a terminal in which the current promotion task needs to be delivered. The delivery terminal is not limited in embodiments of this application.

The material address may be used to enter an access address of a promotion material of the promotion task, for example, www.xxx.com. The promotion material includes, for example, a text, an icon (ICON), a picture, a video, and the like of the promotion application. Optionally, the advertiser may upload, to a server on the advertiser side, the promotion material that needs to be displayed by the promotion application, and enter an address for accessing the promotion material into a material address location. In this way, in a subsequent promotion process, a first electronic device may access the corresponding promotion material based on the material address.

The jump address is used to enter an address of the API created by the advertiser, for example, an address corresponding to a landing page. Optionally, in a subsequent process of displaying recommended content, in response to an operation of a user on the recommended content, the first electronic device jumps to display the corresponding landing page based on the jump address.

The application download address is used to enter a download address of an application promoted by the current promotion task. Optionally, in a subsequent process of displaying recommended content, in response to an operation of a user on the recommended content, the first electronic device determines that an application corresponding to the recommended content is not installed in the first electronic device, and may download the application based on the application download address.

It should be understood that content included in the promotion task information is not limited to the task information shown in FIG. 12A, and the promotion task created by the advertiser may further include more or less task information. For example, the promotion task information may further include a delivery period of the promotion task. For example, the delivery period is from August 1, 2022 to August 5, 2022.

In some embodiments, the promotion task may be used to promote an application, or may be used to promote a commodity. In this case, in a commodity promotion process, on the promotion task creation interface, the promotion task information received by the electronic device on the advertiser side may include information of the promotion commodity.

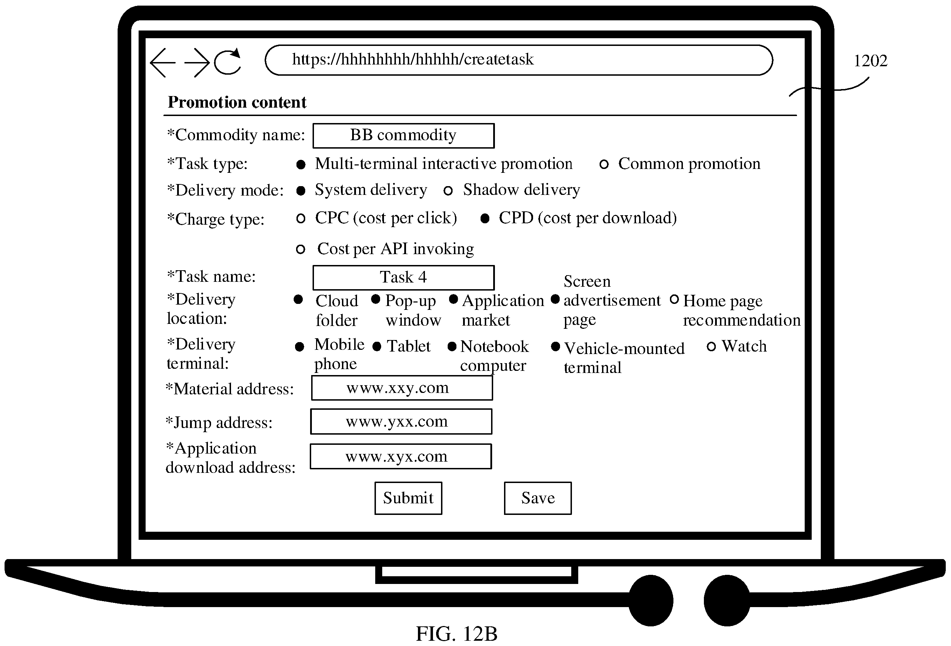

For example, as shown in FIG. 12B, the promotion task information corresponding to the promotion commodity includes, for example, a commodity name, a task type, a delivery mode, a charge type, a task name, a delivery location, a delivery terminal, a material address, a jump address, an application download address, and the like.

The commodity name may be used to enter an identifier of a commodity that is selected by the advertiser and that needs to be promoted. The identifier may be a commodity name. For example, a commodity that needs to be promoted by the promotion task is a "BB commodity". A type of the identifier of the commodity is not limited in embodiments of this application.

For related content of the task type, the delivery mode, the charge type, the task name, the delivery location, the delivery terminal, the material address, the jump address, and the application download address, refer to related content of the promotion task information corresponding to the promotion application in FIG. 12A. Details are not described herein again. The application corresponding to the application download address is an application that may display the promotion commodity, for example, an application used to purchase a commodity. In some embodiments, in response to the received promotion task creation response, the electronic device on the advertiser side displays a web page. The web page may include some promotion task information. The advertiser may modify or add the displayed promotion task information, to complete entering of all promotion information.

For example, as shown in FIG. 12A, in a delivery location part of the web page displayed by the electronic device on the advertiser side, a delivery location selected by the advertiser in a previous process of entering promotion task information, a delivery location commonly used by the advertiser, or the like is automatically selected. In this case, the advertiser may determine, based on a requirement, whether the delivery location needs to be modified. For example, if a delivery location of a home page recommendation further needs to be added in the promotion task, the advertiser only needs to re-select a control corresponding to the home page recommendation to complete entering of the delivery location, and does not need to select delivery locations one by one.

In this way, some promotion task information is displayed, so that an operation of creating the promotion task by the advertiser is simplified, and usage experience of the advertiser is improved.

S1005: The electronic device on the advertiser side sends the promotion task information to the server on the advertisement platform side.

In some embodiments, after determining that the task information is entered, the electronic device on the advertiser side may send the promotion task information to the server on the advertisement platform side. Correspondingly, the server on the advertisement platform side receives the promotion task information sent by the electronic device on the advertiser side.

S1006: The server on the advertisement platform side saves the promotion task information and creates the promotion task.

In some embodiments, the server on the advertisement platform side saves the received promotion task information, and creates the corresponding promotion task.

For example, as shown in FIG. 12A, the electronic device on the advertiser side detects an operation of tapping a save control 121 on the interface 1201 by the advertiser, and may send the collected promotion task information to the server on the advertisement platform side. After receiving the promotion task information, the server on the advertisement platform side may save the promotion task information and create the corresponding promotion task. Subsequently, after the browser application in the electronic device on the advertiser side displays the interface 1101 shown in FIG. 11 in response to the operation that the advertiser indicates to log in to the promotion task management web page, a created promotion task such as a task 3 (not shown in FIG. 11) may be displayed on the interface 1101.

Optionally, the server on the advertisement platform side may check a format of the promotion material in the received promotion task information, and determine whether the format is correct, whether a size of the promotion material needs to be modified, and the like.

Optionally, the promotion task management module 52 may be configured to create and manage an application promotion task.

For example, as shown in FIG. 5B, the advertiser may use the electronic device 500 on the advertiser side via a browser to log in to the promotion task management web page managed by the promotion task management module 52 in the server 400 on the advertiser side, to create and manage an application promotion task. The promotion task management module 52 may receive the promotion task information sent by the electronic device 500 on the advertiser side, and complete creation of the promotion task, so that the advertiser manages the promotion task in the future.

S1007: The server on the advertisement platform side sends a promotion task creation response to the electronic device on the advertiser side.

In some embodiments, after creating the promotion task, the server on the advertisement platform side may send the promotion task creation response to the electronic device on the advertiser side. The promotion task creation response indicates whether the promotion task is successfully created. Correspondingly, the electronic device on the advertiser side receives the promotion task creation response sent by the server on the advertisement platform side.

Optionally, the server on the advertisement platform side checks a format of the promotion material sent by the advertiser side, determines a check result, and includes the check result in the promotion task creation response. In this case, after the electronic device on the advertiser side receives the promotion task creation response, the advertiser may determine, based on the check result carried in the promotion task creation response, whether the promotion material needs to be modified.

S1008: The electronic device on the advertiser side detects a promotion task submission operation.

In some embodiments, the electronic device on the advertiser side determines, based on the received promotion task creation response, that the promotion task has been created. Then, the electronic device on the advertiser side may determine, based on an operation of the advertiser, that the advertiser indicates to submit the promotion task for review.

S1009: The electronic device on the advertiser side submits the promotion task to the server on the advertisement platform side.

In some embodiments, after detecting the promotion task submission operation, the electronic device on the advertiser side submits the promotion task to the server on the advertisement platform side. Correspondingly, the server on the advertisement platform side receives the promotion task submitted by the electronic device on the advertiser side.

For example, as shown in FIG. 12A, after detecting an operation of tapping a submit control 122 by the advertiser, the electronic device on the advertiser side is triggered to create a promotion task based on the promotion task information received on the interface 1201, and sends the promotion task to the server on the advertisement platform side, to request the advertisement platform party to perform review.

S1010: The server on the advertisement platform side sends a promotion task review request to an electronic device on an operation personnel side.

In some embodiments, after receiving the promotion task submitted by the electronic device on the advertiser side, the server on the advertisement platform side may send the promotion task review request to the electronic device on the operation personnel side, to prompt an operation personnel to review the promotion task. Correspondingly, the electronic device on the operation personnel side receives the promotion task review request sent by the server on the advertisement platform side.

S1011: The electronic device on the operation personnel side sends a promotion task review result to the server on the advertisement platform side.

In some embodiments, after receiving the promotion task review request, the electronic device on the operation personnel side may display a promotion task review interface, and the operation personnel may review the promotion task on the interface. For example, the operation personnel may review whether the application that needs to be promoted by the promotion task has been released in the application market, whether the promotion application has commercial promotion permission, and the like. Content to be reviewed is not limited in embodiments of this application.

After the review is completed, the operation personnel may indicate the electronic device on the operation personnel side to send the promotion task review result to the server on the advertisement platform side.

S1012: The server on the advertisement platform side sends the promotion task review result to the electronic device on the advertiser side.

In some embodiments, after receiving the promotion task review result, the server on the advertisement platform side forwards the promotion task review result to the electronic device on the advertiser side. Correspondingly, the electronic device on the advertiser side receives the promotion task review result sent by the server on the advertisement platform side.

In this way, the electronic device on the advertiser side may determine, based on the promotion task review result, whether to complete creation and review of the promotion task. After the promotion task review is approved, an electronic device on a user side may subsequently obtain the application promoted by the promotion task, to implement application promotion.

In this way, in the promotion task creation process, more diversified promotion task types are set. For example, the promotion task may support multi-terminal interactive promotion, so that the promotion application may be subsequently promoted to a more matched electronic device, thereby improving a conversion rate of the promotion application.

In addition, in the promotion application creation process, more delivery locations, delivery terminals, and promotion materials are added, so that the application corresponding to the promotion task can be displayed at more locations of more types of electronic devices, thereby enriching promotion forms. In addition, display materials of the promotion application are enriched, and sensory experience of the user is improved.

In some embodiments, one application may correspond to a plurality of promotion tasks. The plurality of promotion tasks may be different in one or more of the task type, the delivery mode, the charge type, the delivery location, the delivery terminal, a delivery date, and the like.

The foregoing describes the method for creating the API corresponding to the promotion task and the method for creating the promotion task. The following describes a promotion scenario of a promotion task in detail. The promotion scenario is described in detail by using an example in which the promotion task is used to promote an application and a first electronic device requests to obtain the promotion application. The promotion task is used to promote a commodity, and the first electronic device requests to obtain the promotion commodity. For details, refer to related content of the promotion application. It should be understood that, in a process in which the first electronic device requests the promotion task, a server on an advertisement platform side may send the promotion application and/or the promotion commodity to the first electronic device. Details are not described below.

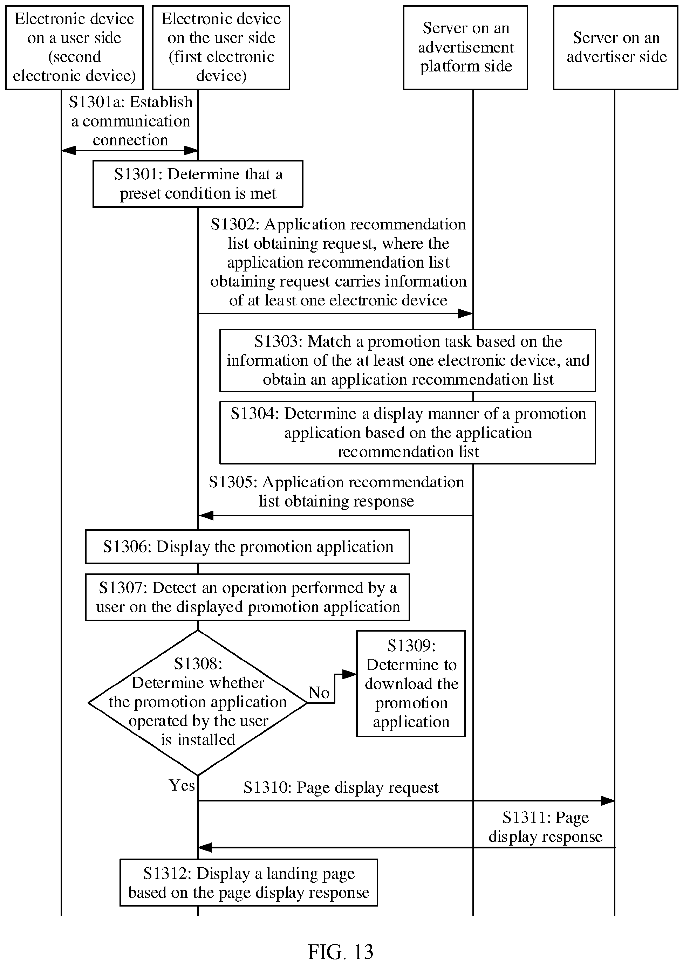

For example, FIG. 13 is a schematic flowchart of still another promotion method according to an embodiment of this application. As shown in FIG. 13, the method includes the following steps.

S1301: A first electronic device determines that a preset condition is met.

The preset condition includes, for example, an operation such as establishing a communication connection between the first electronic device and a second electronic device, and an operation that is detected by the first electronic device and that is performed by a user on the first electronic device (for example, an operation of starting a preset application by the user). There are one or more second electronic devices. The preset application is, for example, an application market, a cloud folder, a leftmost screen, or the like. For example, after establishing the communication connection with the second electronic device in response to an operation that the user indicates to establish the connection with the second electronic device, the first electronic device determines that the first electronic device meets the preset condition.

For another example, the first electronic device detects an operation of tapping an application market icon by the user, and determines that the user indicates to start the application market, to determine that the first electronic device meets the preset condition.

For another example, the first electronic device detects an operation of tapping the cloud folder by the user, and determines that the user indicates to open the cloud folder, to determine that the first electronic device meets the preset condition. The cloud folder may display an application icon of a promotion application.

For another example, the first electronic device detects a sliding operation of the user on a screen, and determines that the user indicates to display the leftmost screen, to determine that the first electronic device meets the preset condition.

In some embodiments, before step S1301, step S1301a is included. In step S1301a, the communication connection is established between the first electronic device and the second electronic device. In addition, the first electronic device may obtain information of the second electronic device. The information includes, for example, one or more of a device type, usage scenario information, a device identifier, an application installation situation, application usage information, and user preference information of the second electronic device.

In some examples, in response to the communication connection established with the second electronic device in step S1301a, in step S1301, the first electronic device may determine that the preset condition is met.

In some other examples, the first electronic device detects an operation performed by the user on the first electronic device, for example, an operation of starting a preset application by the user, and determines that the preset condition is met. Then, the first electronic device may request, based on information of the first electronic device and the information of the second electronic device obtained in step S1301a, to obtain a recommended application from a server on an advertisement platform side (for example, the following step S1302).

S1302: The first electronic device sends an application recommendation list obtaining request to the server on the advertisement platform side. The application recommendation list obtaining request carries information of at least one electronic device.

The at least one electronic device includes the first electronic device, or the at least one electronic device includes the first electronic device and at least one second electronic device, or the at least one electronic device includes at least one second electronic device. In this case, electronic device information includes, for example, the information of the first electronic device and/or the information of the second electronic device. The electronic device information includes, for example, one or more of a device type of the electronic device, usage scenario information of the electronic device, a device identifier of the electronic device, an application installation situation of the electronic device, application usage information of the electronic device, user preference information of the electronic device, and the like.

In some examples, the device type of the electronic device, for example, indicates that the first electronic device is a terminal device such as a mobile phone, a tablet, a notebook computer, a vehicle-mounted terminal, or a watch. As shown in FIG. 12A, in a process of creating a promotion application, an advertiser may select a terminal device that may be used to deliver the promotion application. In this case, the first electronic device includes the device type in the application recommendation list obtaining request. Subsequently, the server on the advertisement platform side may determine, based on the device type, the promotion application that is allowed to be delivered to the first electronic device of the device type.

In some examples, the usage scenario of the electronic device is, for example, a usage scenario of the first electronic device. In some embodiments, after determining that the preset condition is met, the first electronic device may include the usage scenario of the first electronic device in the application recommendation list obtaining request sent to the server on the advertisement platform side, so that the server on the advertisement platform side subsequently screens the promotion task based on the usage scenario.

Optionally, the first electronic device may determine the usage scenario of the first electronic device based on a configured sensor, a device status, a preset algorithm, interaction with the second electronic device, interaction with a server, or the like.

For example, the first electronic device is a vehicle-mounted terminal, and the first electronic device determines, based on a sensor, that the first electronic device is in a driving process. Then, it may be determined that the usage scenario of the first electronic device is a driving scenario.

For another example, the first electronic device is a vehicle-mounted terminal. After determining, based on the sensor, that the first electronic device is in the driving scenario for a period of time, the first electronic device determines, based on the sensor, that a vehicle speed decreases until the vehicle speed is zero and remains in a stopped state for a time longer than a preset time, and a vehicle is not powered off. In this case, the first electronic device may determine, according to the preset algorithm, that the first electronic device is in a rest scenario after driving for a period of time.

In some examples, the device identifier is a unique identifier of the electronic device, and indicates a corresponding electronic device.

For example, the first electronic device includes the device identifier of the second electronic device in the application recommendation list obtaining request. Subsequently, a server on an advertiser side may determine the second electronic device based on the device identifier, to determine information such as the application installation situation and the application usage situation of the second electronic device.

For another example, the first electronic device includes the device identifier of the first electronic device in the application recommendation list obtaining request. Subsequently, a server on an advertiser side may determine the first electronic device based on the device identifier, to determine the device type of the first electronic device.

In some examples, the application installation situation or the application usage situation of the electronic device is, for example, related application information of the second electronic device. In this way, after receiving the application recommendation list obtaining request subsequently, the server on the advertisement platform side may determine information such as the application installation situation and the application usage situation of the second electronic device, and may determine, based on the information, a promotion application sent to the first electronic device, to promote the application as an application that has been installed or used by the user in the second electronic device, thereby conforming to a user preference.

In some examples, the application recommendation list obtaining request carries the user preference information of the electronic device. In this way, subsequently, the server on the advertisement platform side can match, based on the user preference information, a promotion application that meets the user preference, thereby improving usage experience of the user.

In some embodiments, as shown in FIG. 3B, in a multi-terminal interaction scenario, different electronic devices may form promotion groups. The application recommendation list obtaining request sent by the first electronic device to the server on the advertisement platform side carries device information of an electronic device in the promotion group.

In some examples, as shown in (a) in FIG. 3B, in a plurality of devices that establish communication connections, every two of the devices mutually form a promotion group. The application recommendation list obtaining request sent by any device to the server on the advertisement platform side may carry device information of the device and device information of the other device that is in a same promotion group with the device. Subsequently, the server on the advertisement platform side matches the promotion task based on the obtained device information of the electronic device in the promotion group.

For example, as shown in (a) inFIG. 3B, after a device 1 establishes a communication connection with a device 2, the device 1 and the device 2 form a promotion group. After determining that a preset condition is met, the device 1 may send an application recommendation list obtaining request to the server on the advertisement platform side, and include information of the device 1 and information of the device 2 in the application recommendation list obtaining request. Similarly, after determining that a preset condition is met, the device 2 may send an application recommendation list obtaining request to the server on the advertisement platform side, and include information of the device 2 and information of the device 1 in the application recommendation list obtaining request.

Optionally, the first electronic device may establish communication connections with a plurality of second electronic devices, and the first electronic device may belong to a plurality of promotion groups. In this case, the application recommendation list obtaining request sent by the first electronic device may carry device information of the plurality of second electronic devices.

For example, as shown in (a) in FIG. 3B, the device 1 establishes communication connections with both the device 2 and a device 3, the device 1 and the device 2 form a promotion group, and the device 1 and the device 3 form a promotion group. For the device 1, after determining that a preset condition is met, the device 1 may send an application recommendation list obtaining request to the server on the advertisement platform side, and include device information of the device 1, device information of the device 2, and device information of the device 3 in the application recommendation list obtaining request.

In some other examples, as shown in (b) in FIG. 3B, in a plurality of devices that establish communication connections, each device uses a device as a primary device, and the primary device and a secondary device form a promotion group. The application recommendation list obtaining request sent by the first electronic device to the server on the advertisement platform side carries device information of the primary device in the promotion group.

For example, as shown in (b) in FIG. 3B, the first electronic device is a secondary device 1. After determining that a preset condition is met, for example, determining to establish a communication connection with the primary device, the secondary device 1 may send an application recommendation list obtaining request to the server on the advertisement platform side, and include information of the secondary device 1 and information of the primary device in the application recommendation list obtaining request.

In some embodiments, in response to a user setting, an electronic device may determine not to allow another electronic device to share information. In this case, the electronic device no longer establishes a promotion group with another electronic device. Alternatively, after the electronic device establishes a promotion group with another electronic device: after determining that a preset condition is met, the electronic device may carry device information of the another electronic device in the promotion group; and after determining that a preset condition is met, the another electronic device may not carry device information of the electronic device.

For example, an electronic device 1 does not allow another electronic device to share device information. In this case, in response to a communication connection with the electronic device 1, the first electronic device determines that a preset condition is met, and may no longer include device information of the electronic device 1 in an application recommendation list obtaining request sent to the server on the advertisement platform side.

Optionally, the first electronic device and the plurality of second electronic devices may form a promotion group. In this case, after the first electronic device determines that a preset condition is met, an application recommendation list obtaining request sent to the advertisement platform side may carry device information of a second electronic device that is in the plurality of second electronic devices and that is allowed to share device information, and does not carry device information of a second electronic device that is in the plurality of second electronic devices and that is not allowed to share device information.

In some embodiments, an advertisement platform is configured to manage a promotion task. The advertisement platform may be an independent platform, and the server on the advertisement platform side is configured to run the advertisement platform. Alternatively, the advertisement platform is a non-independent platform, for example, may be a platform provided by a server having a promotion task management capability. The server may further provide another capability. For example, the advertisement platform is configured for an application market server, and the server on the advertisement platform side is the application market server.

In some examples, after determining that a preset condition is met, the first electronic device may send an application recommendation list obtaining request to the server on the advertisement platform side.

For example, in response to a user operation, the first electronic device determines to establish a communication connection with the second electronic device. After the communication connection is established, the first electronic device determines that the preset condition is met, and may send the application recommendation list obtaining request to the server on the advertisement platform side.

In some other examples, after determining that the preset condition is met, the first electronic device may send the application recommendation list obtaining request to a server on an application market side. Then, the server on the application market side forwards the application recommendation list obtaining request to the server on the advertisement platform side. Correspondingly, subsequent data interaction between the server on the advertisement platform side and the first electronic device is also forwarded by the server on the application market side.

For example, when detecting an operation that the user indicates to start the application market, the first electronic device may send the application recommendation list obtaining request to the server on the application market side. Then, the server on the application market side forwards the application recommendation list obtaining request to the server on the advertisement platform side.

Alternatively, the server on the application market side is configured to manage the advertisement platform. After receiving the application recommendation list obtaining request, the server on the application market side may directly perform the following steps to determine the promotion application.

The following describes in detail an application recommendation process by using an example in which the first electronic device establishes the communication connection with the second electronic device to trigger that the preset condition is met. It should be understood that if the first electronic device triggers, in response to an operation of starting a preset application by the user, to meet the preset condition, the preset application is an application market. In this case, the interaction flowchart shown in FIG. 13 should show a server (for example, the server on the application market side) corresponding to the preset application. The server is configured to forward data transmitted between an electronic device on a user side and the server on the advertisement platform side, process the forwarded data, and the like. Details are not described below.

S1303: The server on the advertisement platform side matches the promotion task based on the information of the at least one electronic device, and obtains an application recommendation list.

In some embodiments, after obtaining the application recommendation list obtaining request, the server on the advertisement platform side may obtain the electronic device information carried in the application recommendation list obtaining request. In this case, the server on the advertisement platform side may determine, based on the electronic device information, the promotion task that matches the electronic device information in created promotion tasks, and determine the application recommendation list. The application recommendation list includes promotion applications corresponding to one or more promotion tasks.

For example, as shown in FIG. 5B, the delivery module 54 in the server matches the promotion task based on the electronic device information through the promotion task management module 52.

As described in step S1302, the electronic device information includes, for example, one or more of the device type of the electronic device, the usage scenario of the electronic device, the device identifier of the electronic device, the application installation situation of the electronic device, the application usage information of the electronic device, the user preference information of the electronic device, and the like. In this case, after obtaining the electronic device information, the server on the advertisement platform side may match the corresponding promotion task based on the electronic device information, to generate the application recommendation list.

In some examples, the electronic device information may include the usage scenario of the electronic device, for example, the usage scenario of the first electronic device. In this case, after obtaining the electronic device information, the server on the advertisement platform side may determine the usage scenario of the first electronic device, determine an application type that is applicable to the current usage scenario, and match, in the created promotion tasks, the promotion task corresponding to the application type. In addition, the electronic device information may alternatively include the application installation situation and/or the application usage information of the electronic device, for example, the application installation situation and/or the application usage information of the second electronic device. In this case, after obtaining the electronic device information, the server on the advertisement platform side may determine an application installed in the second electronic device, further determine, in applications installed in the second electronic device, an application corresponding to the application type that is applicable to the usage scenario of the first electronic device, and re-match, in promotion tasks that have been matched based on the usage scenario, the promotion task corresponding to the application installed in the second electronic device, to determine a final application recommendation list.

For example, the server on the advertisement platform side determines, based on the electronic device information, that the usage scenario of the first electronic device is a driving scenario, and determines that the application that is applicable to the current usage scenario is a navigation application. There are various types of navigation applications, and there are also a large quantity of matched promotion tasks. However, a user may usually prefer only one or more of the applications. In this case, the server on the advertisement platform side may further determine, based on the electronic device information, the application installation situation and/or the application usage information of the second electronic device, to determine a navigation application used by the user in the second electronic device. The navigation application may be an application commonly used or more habitually used by the user. Therefore, the server on the advertisement platform side may match a promotion task corresponding to the navigation application in the second electronic device, and add the navigation application to the application recommendation list, so that a promotion application in the application recommendation list better conforms to a usage requirement of the user, and a conversion rate of the promotion application is improved.

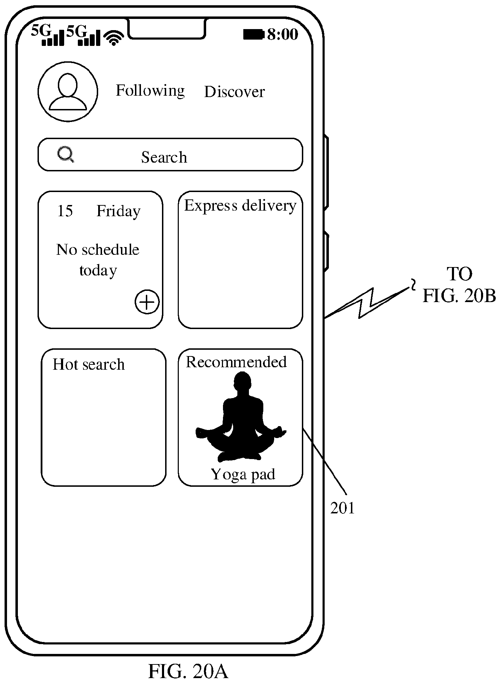

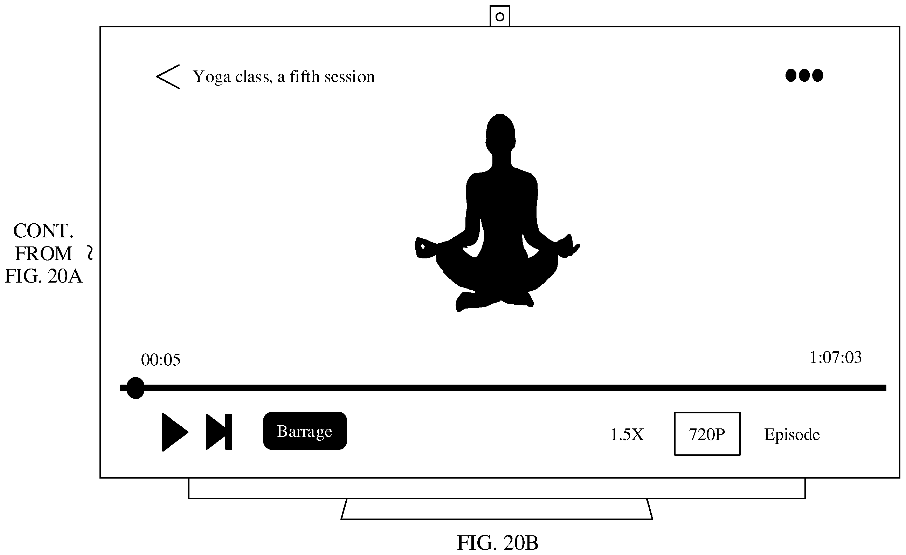

For another example, in a commodity recommendation scenario shown in FIG. 20A and FIG. 20B, the first electronic device (for example, a mobile phone) establishes a communication connection with a large-screen device in response to a user operation. In this case, the large-screen device is playing a video of a Yoga course. The first electronic device sends an application recommendation list obtaining request to the server on the advertisement platform side in response to the communication connection, and includes scenario information of the large-screen device to the application recommendation list obtaining request, for example, a video playing scenario of the Yoga course. In this case, the server on the advertisement platform side may determine, based on a scenario of the large-screen device, a promotion task associated with the scenario, for example, a promotion task used to recommend a commodity (for example, a Yoga pad) related to the Yoga course. In this way, subsequently, recommended content displayed by the first electronic device can meet a requirement of the user in the current usage scenario. As shown in a reference numeral 201, the first electronic device displays, on a card displayed on a leftmost screen, an advertisement used to recommend the Yoga pad.

In some other examples, the electronic device information may include the device type of the electronic device, for example, the device type of the first electronic device. In this case, after obtaining the electronic device information, the server on the advertisement platform side may determine the device type of the first electronic device, and match, based on the device type of the first electronic device, a promotion task that is in the created promotion tasks and that is allowed to be promoted to the electronic device of the device type.

For example, the first electronic device is a vehicle-mounted terminal. After obtaining the device type of the first electronic device in the electronic device information, the server on the advertisement platform side may determine that the first electronic device is a vehicle-mounted terminal. As described in step S1004, the promotion task information may include the delivery terminal. In this case, the server on the advertisement platform side may match, in the created promotion tasks, the promotion task in which the delivery terminal includes the vehicle-mounted terminal, to generate a corresponding application recommendation list.

In some other examples, the electronic device information may include the device type and the usage scenario of the electronic device, for example, the device type and the usage scenario of the first electronic device. After obtaining the electronic device information, the server on the advertisement platform side may determine the device type and the usage scenario of the first electronic device, and may further match, in the created promotion tasks, the promotion task that is applicable to the device type and the usage scenario of the first electronic device. In addition, the electronic device information may alternatively include the application installation situation and/or the application usage information of the electronic device, for example, the application installation situation and/or the application usage information of the second electronic device. In this case, after obtaining the electronic device information, the server on the advertisement platform side may determine an application installed in the second electronic device, and further determine, in the matched promotion tasks, a promotion task that is used to match the application installed in the second electronic device, to determine a final application recommendation list.

For example, after obtaining the device type of the first electronic device in the electronic device information, the server on the advertisement platform side may determine that the first electronic device is a vehicle-mounted terminal. In addition, it is determined, based on the usage scenario of the first electronic device in the electronic device information, that the usage scenario of the first electronic device is a rest scenario after driving for a period of time. The server on the advertisement platform side determines, based on the usage scenario of the first electronic device, that an application type of a to-be-promoted application may be an application used for leisure, such as a short video application or a news application, and then matches, from a plurality of created promotion tasks, a promotion task used to promote the short video application, the news application, or the like. In this case, the server on the advertisement platform side may screen, based on whether a terminal to which these promotion tasks can be delivered is corresponding to the device type of the first electronic device, an application that can be promoted to the device type of the first electronic device, for example, screen a promotion task that can be promoted to the vehicle-mounted terminal from the promotion tasks. Then, the server on the advertisement platform side further screens and promotes an application based on the application installation situation and/or the application usage information of the second electronic device, to determine a final application recommendation list. In some embodiments, after receiving the application list obtaining request forwarded by another server, the server on the advertisement platform side may determine a delivery location corresponding to the server, and further determine a promotion task including the delivery location, to generate a corresponding application recommendation list.

For example, in response to the operation of opening the cloud folder by the user, the first electronic device sends an application recommendation list obtaining request to a server on a cloud folder side. The server on the advertisement platform side receives the application recommendation list obtaining request forwarded by the server on the cloud folder side, and may determine that the first electronic device is to display the promotion application in the cloud folder. In this case, in a promotion task matching process, the server on the advertisement platform side may match, based on the promotion task information, a promotion task whose delivery location includes the cloud folder, and generate an application recommendation list. An application in the application recommendation list may be delivered to the cloud folder. Subsequently, after obtaining the application recommendation list, the first electronic device may display the promotion application in the cloud folder.

In some embodiments, the server on the advertisement platform side may determine a ranking of applications in the application recommendation list based on information such as a promotion price of the promotion task and a user usage habit. The user usage habit may be determined based on information such as the user preference information of the electronic device, the application usage information of the electronic device, and the like that are included in the electronic device information.

For example, as shown in FIG. 5B, the delivery module 54 in the server determines the ranking of the applications in the application recommendation list through the promotion task management module 52.

For example, as described in step S1004, the promotion task information may include information such as the charge type, the payment amount, and the maximum budget. The server on the advertisement platform side may determine, with reference to one or more pieces of the information and with reference to a user click-through rate, an effective cost per mile (effective cost per mile, ECPM), and rank a plurality of promotion tasks based on an ECPM value. Then, the server on the advertisement platform side may determine a ranking of a promotion application in the application recommendation list based on an ECPM value ranking result. A higher ECPM value indicates a higher price offered by the advertiser. Therefore, a higher ranking of an application corresponding to a promotion application in the application recommendation list indicates that the application is more likely to be discovered by the user.

For another example, the server on the advertisement platform side may further determine, based on the application usage information of the electronic device, information such as a frequency of using a promotion application corresponding to each promotion task by the user, so that a promotion application that the user is more interested in may be set at a location with a higher ranking in the application recommendation list.

In some embodiments, as described in step S1302, there may be the plurality of second electronic devices. In this case, the server on the advertisement platform side may determine a promotion application based on the information of the plurality of second electronic devices.

For example, the server on the advertisement platform side determines a promotion application based on application installation situations in the plurality of second electronic devices. In addition, the server on the advertisement platform side may rank the determined promotion application based on application usage information in the plurality of second electronic devices, to generate an application recommendation list.

S1304: The server on the advertisement platform side determines a display manner of the promotion application based on the application recommendation list.

In some embodiments, the server on the advertisement platform side may perform display matching on the promotion application based on the determined application recommendation list. For example, the display manner of the promotion application corresponding to the promotion task in an application promotion display process is determined. For example, the display manner includes a display form and display content.

Optionally, the display form may be corresponding to the delivery location in the promotion task information in step S 1004, and includes, for example, one or more of display in an application market, display in a pop-up window, display in a cloud folder, display on a leftmost screen, display on a screen advertisement page, display in a home page recommendation, and the like. The display content, for example, may be corresponding to the promotion material in the promotion task information in step S 1004, and includes, for example, a text, an icon, a picture, a video, and the like. Further, after determining the promotion material of the promotion application, the server on the advertisement platform side may determine a material address that is in the promotion task information uploaded by the advertiser and that is corresponding to the promotion material. Subsequently, the material address may be correspondingly sent to an electronic device on a user side, so that the electronic device on the user side accesses the corresponding promotion material based on the material address.

In some examples, if the server on the advertisement platform side determines that information of the promotion task corresponding to the application recommendation list includes the delivery location, the display manner of the promotion application corresponding to the delivery location may be determined.

For example, the server on the advertisement platform side determines that the delivery location included in the information of the promotion task corresponding to the application recommendation list is an application market. In this case, the server on the advertisement platform side may determine that the delivery form of the promotion application includes display content required for delivering the application in the application market, for example, an icon.

In some examples, the server on the advertisement platform side receives an application recommendation list obtaining request forwarded by another server, and may determine a delivery location corresponding to the server, to determine a corresponding display manner.

For example, in response to the operation of opening the cloud folder by the user, the first electronic device sends the application recommendation list obtaining request to the server on the cloud folder side. The server on the advertisement platform side receives the application recommendation list obtaining request forwarded by the server on the cloud folder side, and may determine that the first electronic device is to display the promotion application in the cloud folder. In this case, in a process of determining the display manner of the promotion application, the server on the advertisement platform side may determine that the display manner of the promotion application is the display in the cloud folder, and the display content is the icon corresponding to the promotion application. Subsequently, after obtaining the application recommendation list forwarded by the server on the cloud folder side, the first electronic device may display the promotion application in the cloud folder.

Alternatively, the server on the advertisement platform side may determine all display manners corresponding to all promotion applications in the application recommendation list. Subsequently, the first electronic device may display a promotion application at a corresponding location based on the obtained application recommendation list and a corresponding display manner.

For example, in the foregoing examples, the first electronic device displays the promotion application in the cloud folder based on the obtained application recommendation list. Then, in response to an operation of closing the cloud folder and displaying the screen by the user, the first electronic device may alternatively display the promotion application on the screen in a display form of the display on the screen advertisement page.

In this way, the server performs display matching on the promotion application included in the application recommendation list, so that the first electronic device subsequently displays the promotion application at the corresponding display location.

Optionally, after receiving the application recommendation list obtaining request forwarded by the server on the application market side, the server on the advertisement platform side may send the application recommendation list to the server on the application market side. Then, the server on the application market side determines the display manner of the promotion application based on the promotion application in the application recommendation list. For example, the server on the application market side executes a display matching process of the promotion application, as shown in FIG. 14, so that display of the promotion application adapts to other display content.

S1305: The server on the advertisement platform side sends an application recommendation list obtaining response to the first electronic device.

In some embodiments, after determining the application recommendation list and the corresponding display manner of the promotion application, the server on the advertisement platform side may send, to the first electronic device, an application recommendation list obtaining response that carries the application recommendation list and the corresponding display manner of the promotion application, so that the first electronic device subsequently displays the promotion application. Correspondingly, the first electronic device receives the application recommendation list obtaining response sent by the server on the advertisement platform side.

In some embodiments, step S1304 is an optional step. After determining the application recommendation list, the server on the advertisement platform side may include the application recommendation list in the application recommendation list obtaining response sent to the first electronic device. Then, after receiving the application recommendation list obtaining response, the first electronic device executes a display matching process of the promotion application in the application recommendation list based on the application recommendation list carried in the response, to display the promotion application.

S1306: The first electronic device displays the promotion application.

In some embodiments, after receiving the application recommendation list obtaining response, the first electronic device may obtain the application recommendation list and the corresponding display manner of the promotion application that are carried in the response, and display the promotion application.

For example, on an interface 1401 shown in FIG. 14, the first electronic device displays an icon of a promotion application in a dedicated recommendation area of an application market based on the received application recommendation list. For example, the first electronic device detects an operation that the user indicates to start the application market, and obtains the application recommendation list by using the method described in steps S1301 to S1305, to display the promotion application on a displayed application market interface.

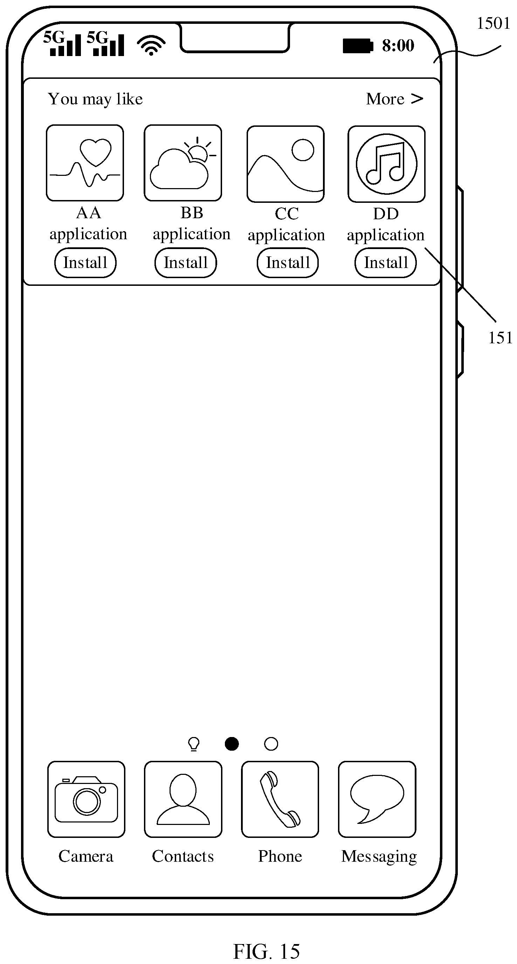

For another example, on an interface 1501 shown in FIG. 15, the first electronic device displays an icon of a promotion application on a screen in a pop-up window manner based on the received application recommendation list, as shown in a reference numeral 151. For example, after establishing the communication connection with the second electronic device, the first electronic device obtains the application recommendation list by using the method in steps S1301 to S1305. In this way, in a process of displaying the screen, the promotion application is displayed in the pop-up window manner.

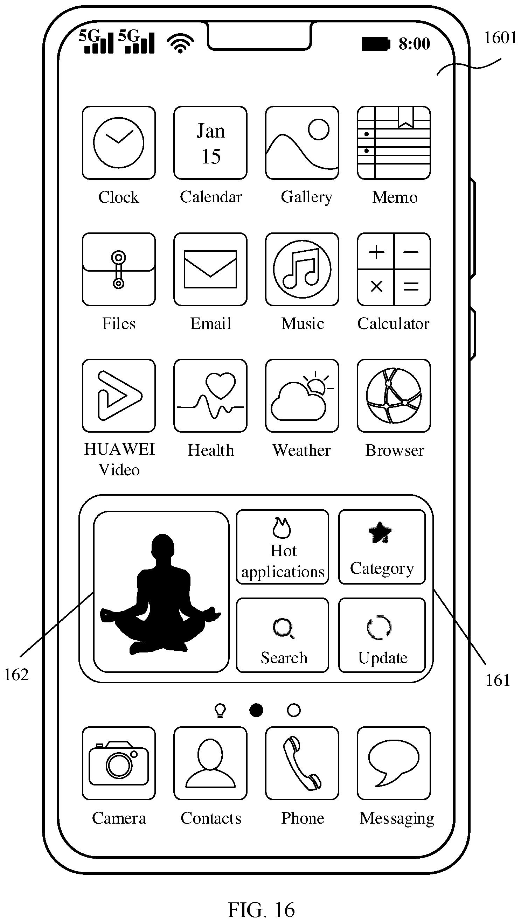

For another example, on an interface 1601 shown in FIG. 16, the first electronic device displays a promotion application in a screen advertisement page manner based on the received application recommendation list. For example, the first electronic device displays a card 161 on the screen. Then, the first electronic device displays a picture, a video, a text, or the like corresponding to the promotion application on the card 161 based on the application recommendation list, as shown in a reference numeral 162. As described in step S1304, specific display content of the promotion application is determined by the server on the advertisement platform side based on the promotion material in the promotion task information set by the advertiser.

For another example, on an interface 1701 shown in FIG. 17, the first electronic device displays an icon of a promotion application in a cloud folder 171 based on the received application recommendation list. Optionally, as shown in a reference numeral 172, the first electronic device may alternatively display an icon of a promotion application in a more recommendation area of the cloud folder.

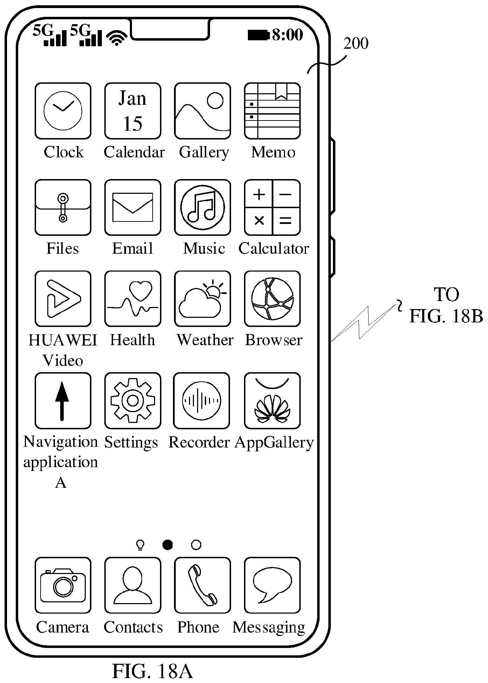

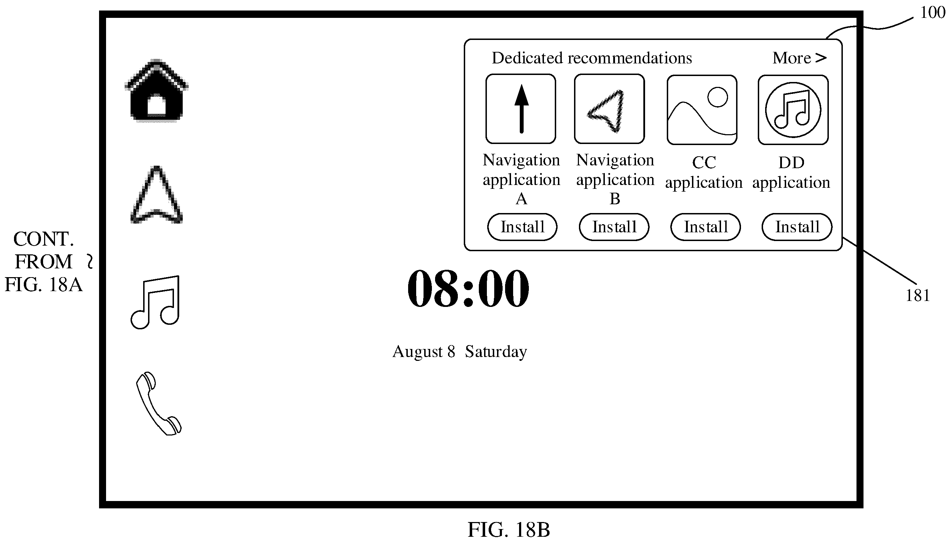

For another example, in a scenario shown in FIG. 18A and FIG. 18B, a first electronic device 100 is a vehicle-mounted terminal, and a second electronic device 200 is a mobile phone. In a vehicle traveling process, the vehicle-mounted terminal determines to establish a communication connection with the mobile phone. In response to establishment of the communication connection, the vehicle-mounted terminal sends an application recommendation list obtaining request to the server on the advertisement platform side. The application recommendation list obtaining request carries a device type of the vehicle-mounted terminal, a usage scenario of the vehicle-mounted terminal being a driving scenario, and application usage information of the mobile phone. In this case, by using the method described in steps S1303 to S1305, the vehicle-mounted terminal may obtain a promotion application that is applicable to a current usage scenario, for example, a navigation application. Then, the vehicle-mounted terminal may display a pop-up window 181, and display a promotion application icon in the pop-up window 181, for example, a navigation application A or a navigation application B. As shown in FIG. 18A and FIG. 18B, if the navigation application A is an application that has been installed in the second electronic device 200 (for example, a mobile phone), the navigation application A may be at a location with a higher ranking in the application recommendation list. Correspondingly, when displaying an icon of the navigation application A, the vehicle-mounted terminal may alternatively display the icon of the navigation application A at a display location with a higher priority in the pop-up window 181.

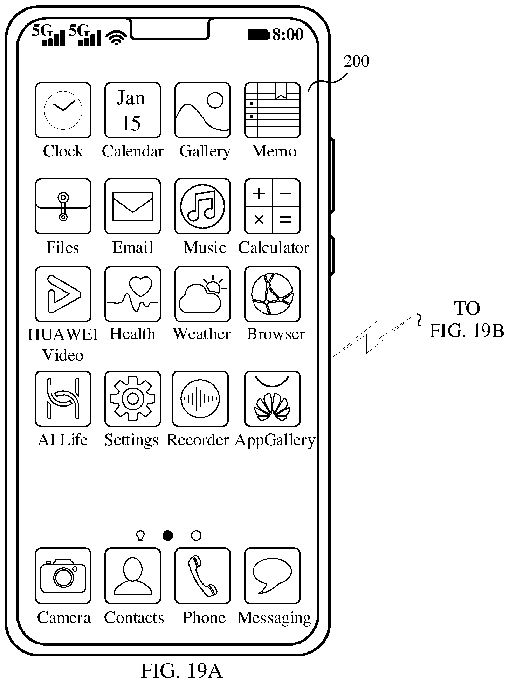

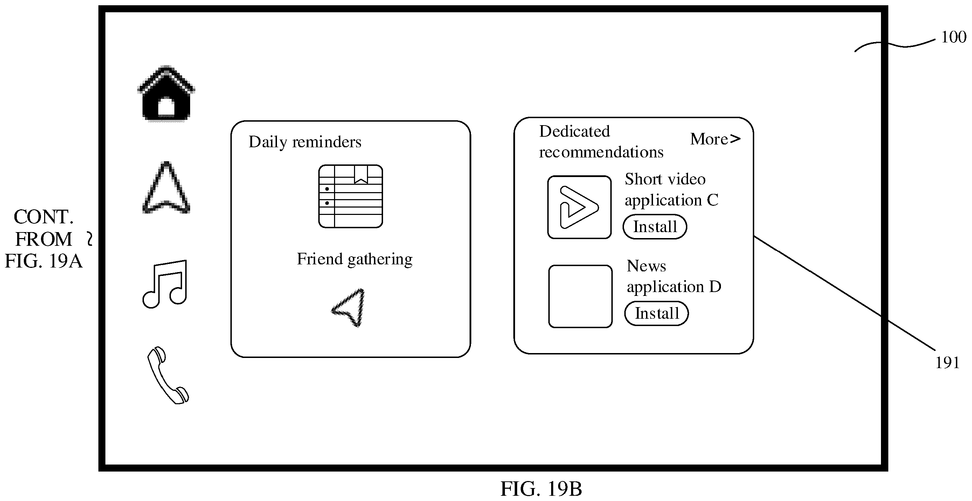

For another example, in a scenario shown in FIG. 19A and FIG. 19B, a first electronic device 100 is a vehicle-mounted terminal, and a second electronic device 200 is a mobile phone. In a process in which a vehicle stops after traveling for a period of time, the vehicle-mounted terminal determines to establish a communication connection with the mobile phone. In response to establishment of the communication connection, the vehicle-mounted terminal sends an application recommendation list obtaining request to the server on the advertisement platform side. The application recommendation list obtaining request carries a device type of the vehicle-mounted terminal, a usage scenario of the vehicle-mounted terminal being a rest scenario after traveling for a period of time, and application usage information of the mobile phone. In this case, by using the method described in steps S1303 to S1305, the vehicle-mounted terminal may obtain a promotion application that is applicable to a current usage scenario, for example, a short video application and a news application. Then, the vehicle-mounted terminal may display a home page recommendation card 191, and display a promotion application icon such as a short video application C or a news application D on the home page recommendation card 191.

For another example, as shown on an interface 1202 in FIG. 12B, the promotion task information uploaded by the advertiser may be used to promote a commodity, for example, a BB commodity. In this case, after obtaining the application recommendation list obtaining response, the first electronic device may display a corresponding promotion commodity in a display manner. As shown in FIG. 20A and FIG. 20B, a mobile phone displays a leftmost screen, and displays a card 201 on the leftmost screen. The card 201 is used to display content corresponding to the promoted BB commodity (for example, if the BB commodity is a Yoga pad, recommended content used to recommend the Yoga pad may be displayed).

S1307: The first electronic device detects an operation performed by the user on the displayed promotion application.

In some embodiments, in a promotion application displaying process, the first electronic device detects the operation performed by the user on the promotion application, and may determine that the user indicates to display specific content of the promotion application.

Optionally, the operation performed by the user on the promotion application includes, for example, an operation performed by the user on a promotion application icon, an advertisement page, a card, a promotion video, a promotion text, or the like.

For example, as shown in FIG. 14, in a promotion application displaying process, the first electronic device detects an operation of tapping a DD application icon 141 by the user, and determines that the user indicates to display specific content of the DD application.

For another example, as shown in FIG. 20A and FIG. 20B, in a promotion commodity displaying process, the first electronic device detects an operation of tapping the card 201 by the user, and determines that the user indicates the card 201 to display specific content corresponding to the Yoga pad.

S1308: The first electronic device determines whether the promotion application operated by the user is installed. If the promotion application operated by the user is not installed, step S1309 is performed. If the promotion application operated by the user is installed, step S1310 is performed.

In some embodiments, in response to the operation performed by the user on the promotion application, the first electronic device determines whether the promotion application is installed in the first electronic device. If the promotion application is not installed, the first electronic device may determine to install the promotion application, that is, to perform the following step S1309. If the promotion application has been installed, the first electronic device may determine to request the server on the advertiser side to display a landing page corresponding to the promotion application, that is, perform the following step S1310.

S1309: The first electronic device may determine to download the promotion application.

In some embodiments, in response to the operation performed by the user on the promotion application, the first electronic device determines that no promotion application is installed in the first electronic device. In this case, the first electronic device may determine to download the promotion application.

Optionally, after determining to download the promotion application, the first electronic device may send a promotion application download request to the server on the application market side. The promotion application download request is used to request to display a download page of the promotion application operated by the user, to download the promotion application. Optionally, the download page displayed by the first electronic device may include a download control. In response to an operation performed by the user on the download control, the first electronic device requests the server on the application market side to download the promotion application, to avoid that directly downloading the promotion application does not meet a user requirement.

For example, as shown in FIG. 12A, in a promotion task creation process, the advertiser enters an application download address. Subsequently, in an application promotion process, the application recommendation list obtaining response obtained by the first electronic device may carry the application download address corresponding to the promotion application. In this way, when determining that the promotion application needs to be downloaded, the first electronic device may request to download the promotion application based on the application download address.

Optionally, as shown in FIG. 12A, for example, the charge type in the promotion task information corresponding to the promotion application is CPD, namely, cost per download. In this case, an application market party may charge the download of the promotion application.

S1310: The first electronic device sends a page display request to the server on the advertiser side.

In some embodiments, in response to the operation performed by the user on the promotion application, the first electronic device determines that the promotion application has been installed in the first electronic device. In this case, the first electronic device may determine to display the landing page corresponding to the promotion application.

Optionally, in step S1305, the application recommendation list response obtained by the first electronic device includes promotion task information corresponding to a recommended application, and the promotion task information includes a jump address, for example, a jump address shown in FIG. 12A. After determining to display the landing page, the first electronic device may invoke a third-party API based on the jump address, and send the page display request to the server on the advertiser side, to request to jump to display the corresponding landing page.

S1311: The server on the advertiser side sends a page display response to the first electronic device.

In some embodiments, after receiving the page display request, the server on the advertiser side may determine corresponding page data. Then, the server on the advertiser side generates the page display response based on the determined page data. Then, the server on the advertiser side sends the page display response to the first electronic device. Correspondingly, the first electronic device receives the page display response sent by the server on the advertiser side.

S1312: The first electronic device displays the landing page based on the page display response.

In some embodiments, after receiving the page display response, the first electronic device may obtain the page data carried in the page display response. Then, the first electronic device may display the corresponding landing page based on the page data.

Optionally, after determining that the promotion application is installed in the first electronic device, the first electronic device may start the promotion application, and display the landing page in the promotion application.

Optionally, after determining that the promotion application is installed in the first electronic device, the first electronic device directly displays the landing page.

For example, as shown in FIG. 16, the first electronic device detects an operation performed by the user on the picture 162 corresponding to the promotion application displayed on the card 161, determines that the promotion application is installed in the first electronic device, and may directly display a landing page of the promotion application on the card 161. Alternatively, in a commodity promotion scenario shown in FIG. 20A and FIG. 20B, when detecting an operation performed by the user on the commodity promotion card 201 displayed on the leftmost screen, the first electronic device may directly display a landing page of a commodity on the card 201. Alternatively, in step S1306, after obtaining the application recommendation list obtaining response, the first electronic device directly displays the landing page of the commodity on the commodity promotion card 201 displayed on the leftmost screen.

In this way, the information of the plurality of electronic devices is combined to display the promotion application, so that a promotion form of the promotion application is more diversified, and is more suitable for a usage scenario of the user, thereby meeting a usage requirement of the user, and improving a conversion rate of the promotion application.

In addition, with reference to the terminal type, the rich delivery location, and the rich promotion material, the display form of the promotion application is more diversified. The user may view the promotion application at a plurality of display locations in a plurality of manners such as a text, a picture, and a video, thereby improving a display effect of the promotion application and improving sensory experience of the user.

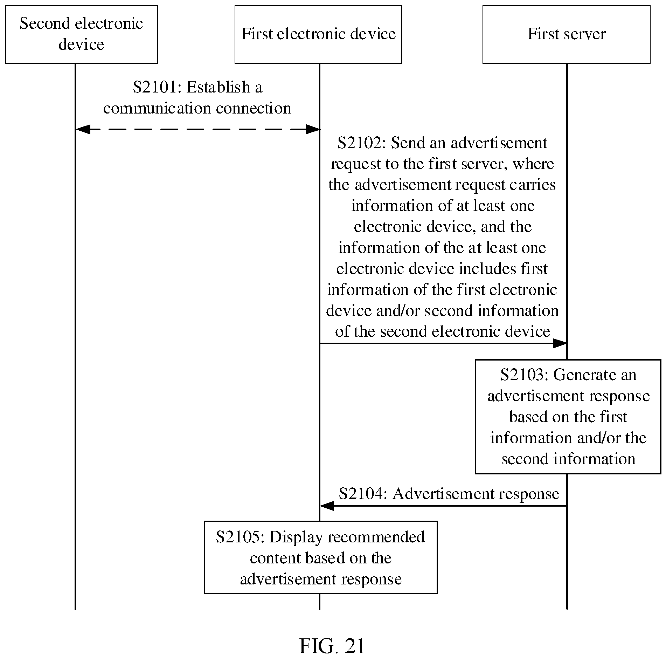

For example, FIG. 21 is a schematic flowchart of still another promotion method according to an embodiment of this application. As shown in FIG. 21, the method includes the following steps.

S2101: Establish a communication connection between a first electronic device and a second electronic device.

In some embodiments, before sending an advertisement request to a first server, the first electronic device may establish the communication connection with the second electronic device.

For example, in response to the communication connection established with the second electronic device, the first electronic device sends the advertisement request to the first server.

For another example, after determining to send the advertisement request to the first server, the first electronic device may carry information of the second electronic device that establishes the communication connection with the first electronic device. Therefore, before the first electronic device sends the advertisement request to the first server (that is, before step S2102), the first electronic device establishes the communication connection with the second electronic device.

In some embodiments, after establishing the communication connection with the second electronic device, the first electronic device may obtain second information of the second electronic device. Alternatively, before determining to send the advertisement request to the first server, the first electronic device obtains the information of the second electronic device through the communication connection with the second electronic device.

S2102: The first electronic device sends the advertisement request to the first server, where the advertisement request carries information of at least one electronic device, and the information of the at least one electronic device includes first information of the first electronic device and/or the second information of the second electronic device.

The first server is, for example, a server on an advertisement platform side.

In some embodiments, the information of the at least one electronic device includes information of a plurality of electronic devices that establish communication connections with the first electronic device. In this way, the first server may subsequently determine recommended content based on the information of the plurality of electronic devices, and the recommended content can better meet a user requirement.

In some embodiments, the first information includes one or more of a device type, usage scenario information, a device identifier, an application installation situation, application usage information, and user preference information of the first electronic device; and the second information includes one or more of a device type, usage scenario information, a device identifier, an application installation situation, application usage information, and user preference information of the second electronic device.

In some embodiments, after determining that a preset condition is met, the first electronic device sends the advertisement request to the first server. The preset condition includes establishing a communication connection with the second electronic device, or detecting a first operation performed by a user on the first electronic device.

Optionally, the first operation is an operation of starting a target application, and the target application includes an application market, a leftmost screen, or a cloud folder.

For example, after establishing the communication connection with the second electronic device in response to an operation that the user indicates to establish the connection with the second electronic device, the first electronic device determines that the first electronic device meets the preset condition.

For another example, the first electronic device detects an operation of tapping an application market icon by the user, and determines that the user indicates to start the application market, to determine that the first electronic device meets the preset condition.

S2103: The first electronic device generates an advertisement response based on the first information and/or the second information.

In some embodiments, after obtaining the advertisement request, the first electronic device may determine recommended content based on the first information and/or the second information carried in the advertisement request, to generate an advertisement response carrying the recommended content.

For example, the information of the at least one electronic device includes the first information and the second information, the first information includes the usage scenario information of the first electronic device, and the second information includes the application installation situation or the application usage information of the second electronic device. In this case, after the first server obtains the first information and the second information, a determined application corresponding to the recommended content is applicable to a usage scenario of the first electronic device, and is an application installed in the second electronic device. In this way, the recommended content can better conform to a current usage scenario and satisfy a usage habit of the user. Further, a conversion rate of the application corresponding to the recommended content may be increased.

In some embodiments, an advertisement type corresponding to the recommended content is a type of advertisement delivery performed on the first electronic device and the second electronic device.

For example, as shown in FIG. 12A, in the promotion task creation process, the task type included in the promotion task information received by the first server is multi-terminal interactive promotion. To be specific, the advertisement type corresponding to the promotion task is that delivery is allowed to be performed on a plurality of electronic devices that establish communication connections.

In some embodiments, the advertisement request is used to request to obtain a recommended application, or the advertisement request is used to request to obtain a recommended commodity. Optionally, the recommended content is, for example, a promotion application or a promotion commodity.

For example, as shown in FIG. 12A, the promotion task created by the current advertiser is used to promote an application, for example, an AA application. For another example, as shown in FIG. 12B, a promotion task created by a current advertiser is used to promote a commodity, for example, a BB commodity.

In some embodiments, before receiving the advertisement request sent by the first electronic device, the first server further receives a delivery request that is of a first advertisement and that is sent by a third electronic device. The delivery request of the first advertisement includes the recommended content and an advertisement type of the first advertisement. The advertisement type of the first advertisement is a type of advertisement delivery performed on the first electronic device and the second electronic device.

In other words, before the recommended content is determined, the first server needs to select and obtain a promotion task including the recommended content, to determine the recommended content based on the promotion task.

S2104: The first server sends the advertisement response to the first electronic device.

In some embodiments, after determining the advertisement response, the first server sends the advertisement response to the first electronic device. Correspondingly, the first electronic device receives the advertisement response sent by the first server.

S2105: The first electronic device displays the recommended content based on the advertisement response.

In some embodiments, after receiving the advertisement response, the first electronic device can obtain the recommended content carried in the advertisement response. Then, the first electronic device may display the recommended content.

For example, the recommended content is used to recommend an application. As shown in an interface 1401 in FIG. 14, the first electronic device displays an icon of a promotion application in a dedicated recommendation area of an application market based on received application recommendation list.

In some embodiments, in a process of displaying the recommended content, the first electronic device detects a second operation on the recommended content. When a first application corresponding to the recommended content is installed in the first electronic device, the first electronic device sends a page display request to a second server. Then, in response to a received page display response sent by the second server, the first electronic device displays a landing page corresponding to the first application. The second server is, for example, a server on an advertiser side.

For example, as shown in FIG. 16, the first electronic device detects an operation performed by the user on a picture 162 corresponding to a promotion application displayed on a card 161, determines that the promotion application corresponding to the picture 162 is installed in the first electronic device, and may directly display a landing page of the promotion application on the card 161.

In some other embodiments, in a process of displaying the recommended content, the first electronic device detects a second operation on the recommended content. When a first application corresponding to the recommended content is not installed in the first electronic device, the first electronic device sends an application download request to a third server. The application download request is used to request to download the first application, and the third server is the same as or different from the first server. The third server is, for example, a server on an application market side.

For example, as shown in FIG. 12A, in a promotion task creation process, the advertiser enters an application download address. Subsequently, in an application promotion process, the advertisement response obtained by the first electronic device may carry the application download address. In this way, when determining that the application corresponding to the recommended content needs to be downloaded, the first electronic device may request to download the application based on the application download address.

In this way, the recommended content is promoted with reference to the information of the plurality of electronic devices, so that the recommended content is more suitable for a usage scenario of the user, thereby meeting a usage requirement of the user.

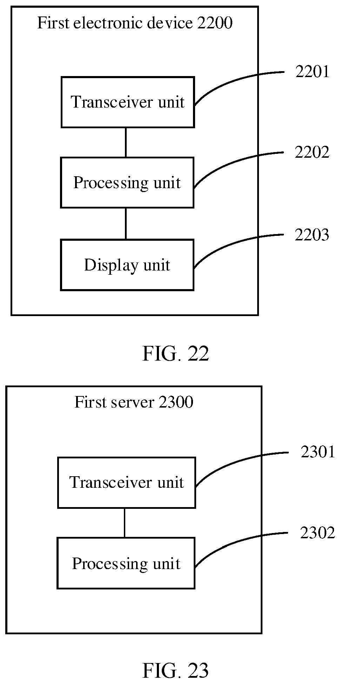

The foregoing describes in detail the promotion methods provided in embodiments of this application with reference to FIG. 6 and FIG. 21. The following describes in detail an electronic device and a server provided in embodiments of this application with reference to FIG. 22 and FIG. 23.

In a possible design, FIG. 22 is a schematic diagram of a structure of a first electronic device according to an embodiment of this application. As shown in FIG. 22, a first electronic device 2200 may include a transceiver unit 2201, a processing unit 2202, and a display unit 2203. The first electronic device 2200 may be configured to implement a function of the first electronic device in the foregoing method embodiments.

Optionally, the transceiver unit 2201 is configured to support the first electronic device 2200 in performing S1301a, S1302, S1305, S1307, S1310, and S1311 in FIG. 13; and/or is configured to support the first electronic device 2200 in performing S2101, S2102, and S2104 in FIG. 21.

Optionally, the processing unit 2202 is configured to support the first electronic device 2200 in performing S1301, S1308, and S1309 in FIG. 13; and/or is configured to support the first electronic device 2200 in performing S2105 in FIG. 21.

Optionally, the display unit 2203 is configured to support the first electronic device 2200 in performing S1306 and S1312 in FIG. 13; and/or is configured to support the first electronic device 2200 in performing S2105 in FIG. 21.

The transceiver unit may include a receiving unit and a sending unit, may be implemented by a transceiver or a transceiver-related circuit component, and may be a transceiver or a transceiver module. Operations and/or functions of the units in the first electronic device 2200 are separately intended to implement corresponding procedures of the promotion methods in the foregoing method embodiments. All related content of the steps in the foregoing method embodiments may be referenced to function descriptions of corresponding functional units. For brevity, details are not described herein again.

Optionally, the first electronic device 2200 shown in FIG. 22 may further include a storage unit (not shown in FIG. 22), and the storage unit stores a program or instructions. When the transceiver unit 2201, the processing unit 2202, and the display unit 2203 execute the program or the instructions, the first electronic device 2200 shown in FIG. 22 is enabled to perform the promotion methods in the foregoing method embodiments.

For technical effects of the first electronic device 2200 shown in FIG. 22, refer to the technical effects of the promotion methods in the foregoing method embodiments. Details are not described herein again.

In addition to a form of the first electronic device 2200, the technical solutions provided in this application may also be a functional unit or a chip in the first electronic device, or an apparatus that matches the first electronic device.

In a possible design, FIG. 23 is a schematic diagram of a structure of a first server according to an embodiment of this application. As shown in FIG. 23, a first server 2300 may include a transceiver unit 2301 and a processing unit 2302. The first server 2300 may be configured to implement a function of the server on the advertisement platform side in the foregoing method embodiments.

Optionally, the transceiver unit 2301 is configured to support the first server 2300 in performing S602, S603, S605, S608, S609, S610, S611, S613, S614, S616, and S617 in FIG. 6; and/or is configured to support the first server 2300 in performing S1002, S1003, S1005, S1007, S1009, S1010, S1011, and S1012 in FIG. 10; and/or is configured to support the first server 2300 in performing S1302 and S1305 in FIG. 13; and/or is configured to support the first server 2300 in performing S2102 and S2104 in FIG. 21.

Optionally, the processing unit 2302 is configured to support the first server 2300 in performing S602, S603, S605, S606, S607, and S608 in FIG. 6; and/or is configured to support the first server 2300 in performing S1006 in FIG. 10; and/or is configured to support the first server 2300 in performing S1303 and S1304 in FIG. 13; and/or is configured to support the first server 2300 in performing S2103 in FIG. 21.

The transceiver unit may include a receiving unit and a sending unit, may be implemented by a transceiver or a transceiver-related circuit component, and may be a transceiver or a transceiver module. Operations and/or functions of the units in the first server 2300 are separately intended to implement corresponding procedures of the promotion methods in the foregoing method embodiments. All related content of the steps in the foregoing method embodiments may be referenced to function descriptions of corresponding functional units. For brevity, details are not described herein again.

Optionally, the first server 2300 shown in FIG. 23 may further include a storage unit (not shown in FIG. 23), and the storage unit stores a program or instructions. When the transceiver unit 2301 and the processing unit 2302 execute the program or the instructions, the first server 2300 shown in FIG. 23 is enabled to perform the promotion methods in the foregoing method embodiments.

For technical effects of the first server 2300 shown in FIG. 23, refer to the technical effects of the promotion methods in the foregoing method embodiments. Details are not described herein again.

In addition to a form of the first server 2300, the technical solutions provided in this application may also be a functional unit or a chip in the first server, or an apparatus that matches the first server.

An embodiment of this application further provides a chip system, including a processor. The processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by hardware, or may be implemented by software. When being implemented by hardware, the processor may be a logic circuit, an integrated circuit, or the like. When being implemented by software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor circuit (digital signal processor, DSP), a microcontroller unit (micro-controller unit, MCU), a programmable logic device (programmable logic device, PLD), or another integrated chip.

It should be understood that the steps in the foregoing method embodiments may be completed by using a hardware integrated logic circuit or instructions in a form of software in the processor. The steps of the methods disclosed with reference to embodiments of this application may be directly performed by a hardware processor, or may be performed by a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the promotion methods in the foregoing embodiments.

An embodiment of this application further provides a computer program product. When the computer program product is run on a computer, the computer is enabled to perform the foregoing related steps, to implement the promotion methods in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the promotion methods in the foregoing method embodiments.

The apparatus, the computer-readable storage medium, the computer program product, or the chip provided in embodiments of this application is configured to perform the corresponding method provided above. Therefore, for beneficial effects that can be achieved, refer to the beneficial effects in the corresponding method provided above. Details are not described herein again.

Methods or algorithm steps described in combination with the content disclosed in embodiments of this application may be implemented by hardware, or may be implemented by a processor by executing a software instruction. The software instruction may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an application-specific integrated circuit (application-specific integrated circuit, ASIC).

Based on the descriptions of the foregoing implementations, a person skilled in the art may clearly understand that, for ease and brevity of description, division of the foregoing functional modules is merely used as an example for description. During actual application, the foregoing functions may be allocated to different modules for implementation based on a requirement. In other words, an apparatus is divided into different functional modules in terms of an inner structure, to implement all or some of the functions described above. For a specific working process of the system, apparatus, and unit, refer to a corresponding process in the foregoing method embodiments. Details are not described herein again.

In the several embodiments provided in this application, it should be understood that the disclosed methods may be implemented in another manner. For example, the apparatus embodiment described above is merely an example. For example, the module or unit division is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The computer-readable storage medium includes but is not limited to any one of the following: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A promotion method, applied to a first electronic device, wherein the method comprises:
sending an advertisement request to a first server, wherein the advertisement request carries information of at least one electronic device, the information of the at least one electronic device comprises first information of the first electronic device and/or second information of a second electronic device, and a communication connection is established between the first electronic device and the second electronic device;
receiving an advertisement response sent by the first server, wherein the advertisement response is determined by the first server based on the first information and/or the second information; and
displaying recommended content based on the advertisement response.

2. The method according to claim 1, wherein before the sending an advertisement request to a first server, the method further comprises:
determining that a preset condition is met, wherein the preset condition comprises establishing a communication connection with the second electronic device, or detecting a first operation performed by a user on the first electronic device.

3. The method according to claim 1 or 2, wherein the first information comprises one or more of a device type, usage scenario information, a device identifier, an application installation situation, application usage information, and user preference information of the first electronic device; and the second information comprises one or more of a device type, usage scenario information, a device identifier, an application installation situation, application usage information, and user preference information of the second electronic device.

4. The method according to claim 3, wherein an application corresponding to the recommended content is applicable to a usage scenario of the first electronic device, and is an application installed in the second electronic device.

5. The method according to any one of claims 1 to 4, wherein before the sending an advertisement request to a first server, the method further comprises:
obtaining the second information of the second electronic device.

6. The method according to claim 2, wherein the first operation is an operation of starting a target application, and the target application comprises an application market, a leftmost screen, or a cloud folder.

7. The method according to any one of claims 1 to 6, wherein the method further comprises:
detecting a second operation on the recommended content;
when a first application corresponding to the recommended content is installed in the first electronic device, sending a page display request to a second server; and
in response to a received page display response sent by the second server, displaying a landing page corresponding to the first application.

8. The method according to any one of claims 1 to 6, wherein the method further comprises:
detecting a second operation on the recommended content; and
when a first application corresponding to the recommended content is not installed in the first electronic device, sending an application download request to a third server, wherein the application download request is used to request to download the first application, and the third server is the same as or different from the first server.

9. The method according to any one of claims 1 to 8, wherein the information of the at least one electronic device comprises information of a plurality of electronic devices that establish communication connections with the first electronic device.

10. The method according to any one of claims 1 to 9, wherein an advertisement type corresponding to the recommended content is a type of advertisement delivery performed on the first electronic device and the second electronic device.

11. The method according to any one of claims 1 to 10, wherein the advertisement request is used to request to obtain a recommended application, or the advertisement request is used to request to obtain a recommended commodity.

12. A promotion method, applied to a first server, wherein the method comprises:
receiving an advertisement request sent by a first electronic device, wherein the advertisement request carries information of at least one electronic device, the information of the at least one electronic device comprises first information of the first electronic device and/or second information of a second electronic device, and a communication connection is established between the first electronic device and the second electronic device;
generating an advertisement response based on the first information and/or the second information; and
sending the advertisement response to the first electronic device, wherein the advertisement response indicates the first electronic device to display recommended content.

13. The method according to claim 12, wherein the first information comprises one or more of a device type, usage scenario information, a device identifier, an application installation situation, application usage information, and user preference information of the first electronic device; and the second information comprises one or more of a device type, usage scenario information, a device identifier, an application installation situation, application usage information, and user preference information of the second electronic device.

14. The method according to claim 13, wherein an application corresponding to the recommended content is applicable to a usage scenario of the first electronic device, and is an application installed in the second electronic device.

15. The method according to any one of claims 12 to 14, wherein before the receiving an advertisement request sent by a first electronic device, the method further comprises:
receiving a delivery request that is of a first advertisement and that is sent by a third electronic device, wherein the delivery request of the first advertisement comprises the recommended content and an advertisement type of the first advertisement, and the advertisement type of the first advertisement is a type of advertisement delivery performed on the first electronic device and the second electronic device.

16. The method according to any one of claims 11 to 15, wherein the advertisement request is used to request to obtain a recommended application, or the advertisement request is used to request to obtain a recommended commodity.

17. A promotion system, wherein the system comprises a first electronic device, a second electronic device, and a first server, and a communication connection is established between the first electronic device and the second electronic device;
the first electronic device is configured to send an advertisement request to the first server, wherein the advertisement request carries information of at least one electronic device, and the information of the at least one electronic device comprises first information of the first electronic device and/or second information of the second electronic device;
the first server is configured to receive the advertisement request;
the first server is further configured to generate an advertisement response based on the first information and/or the second information;
the first server is further configured to send the advertisement response to the first electronic device; and
in response to the received advertisement response, the first electronic device is further configured to display recommended content.

18. The system according to claim 17, wherein
the second electronic device is configured to send the second information to the first electronic device; and
the first electronic device is further configured to receive the second information.

19. The system according to claim 17 or 18, wherein
the first electronic device is further configured to determine that a preset condition is met, wherein the preset condition comprises establishing a communication connection with the second electronic device, or detecting a first operation performed by a user on the first electronic device.

20. The system according to any one of claims 17 to 19, wherein the first information comprises one or more of a device type, usage scenario information, a device identifier, an application installation situation, application usage information, and user preference information of the first electronic device; and the second information comprises one or more of a device type, usage scenario information, a device identifier, an application installation situation, application usage information, and user preference information of the second electronic device.

21. The system according to any one of claims 17 to 20, wherein an advertisement type corresponding to the recommended content is a type of advertisement delivery performed on the first electronic device and the second electronic device.

22. An electronic device, comprising a processor, a memory, and a display, wherein the memory and the display are coupled to the processor, the memory is configured to store computer program code, the computer program code comprises computer instructions, and when the processor reads the computer instructions from the memory, the electronic device is enabled to perform the method according to any one of claims 1 to 11.

23. A server, comprising a processor and a memory, wherein the memory is coupled to the processor, the memory is configured to store computer program code, the computer program code comprises computer instructions, and when the processor reads the computer instructions from the memory, the server is enabled to perform the method according to any one of claims 12 to 16.

24. A computer-readable storage medium, wherein the computer-readable storage medium comprises a computer program, and when the computer program is run on an electronic device, the electronic device is enabled to perform the method according to any one of claims 1 to 11.

25. A computer-readable storage medium, wherein the computer-readable storage medium comprises a computer program, and when the computer program is run on a server, the server is enabled to perform the method according to any one of claims 12 to 16.

26. A computer program product, wherein when the computer program product is run on a computer, the computer is enabled to perform the method according to any one of claims 1 to 11, or the computer is enabled to perform the method according to any one of claims 12 to 16.
